# EUROPEAN PATENT APPLICATION

(11) **EP 4 797 039 A1**
(43) Date of publication of application: **26.08.2026**
(21) Application number: 24900815.2
(22) Date of filing: 07.10.2024
(51) Int. Cl.: G06F 1/16

(54) **ELECTRONIC DEVICE INCLUDING STRUCTURE FOR REDUCING DAMAGE TO FLEXIBLE DISPLAY**

(30) Priority: 04.12.2023 KR 20230173117; 16.01.2024 KR 20240007068
(71) Applicant: Samsung Electronics Co., Ltd., Suwon-si, Gyeonggi-do 16677 (KR)
(72) Inventor: KIM, Geonhee, Suwon-si Gyeonggi-do 16677 (KR); CHOI, Seongdae, Suwon-si Gyeonggi-do 16677 (KR)
(74) Representative: Gulde & Partner
(86) International application number: PCT/KR2024/015206
(87) International publication number: WO 2025/121627

(57) **Abstract**

A foldable electronic device according to one embodiment may comprise: a flexible display including a bending area configured to be bent within a folded state of the foldable electronic device; and a support plate including a recess facing the bending area. A portion of the bending area may be disposed in a space provided by the recess in the folded state. The foldable electronic device may include an elastic member disposed between the bending area and the support plate.

## Description

### [Technical Field]

The present disclosure relates to an electronic device including a structure for reducing damage to a flexible display.

### [Background Art]

As demands of users become diverse, an electronic device may include a structure in which a display for displaying content is deformable. For example, the electronic device may include a foldable flexible display. The electronic device may require a support structure of the display for reducing damage of the display or a buffer structure of the display for reducing deformation of the display.

The above-described information may be provided as a related art for the purpose of helping understanding of the present disclosure. No argument or decision is made as to whether any of the above description may be applied as a prior art related to the present disclosure.

### [Disclosure]

### [Technical Solution]

A foldable electronic device is disclosed. The foldable electronic device may comprise a housing including a first housing part and a second housing part. The foldable electronic device may comprise a flexible display, disposed on the first housing part and the second housing part, including a bending region to be bent in a folded state of the foldable electronic device. The foldable electronic device may comprise a hinge assembly positioned under the flexible display and rotatably connecting the second housing part to the first housing part. The foldable electronic device may comprise a support plate coupled to the hinge assembly and including a recess facing the bending region. A portion of the bending region may be disposed in a space provided by the recess in the folded state. The foldable electronic device may comprise an elastic member disposed between the bending region and the support plate.

A foldable electronic device is disclosed. According to an embodiment, the foldable electronic device may comprise a flexible display including a first region, a second region spaced apart from the first region, and a bending region that is positioned between the first region and the second region and is configured to be bent in a folded state of the foldable electronic device. The foldable electronic device may comprise a support plate including a recess facing the bending region and providing a space for the bending region moved according to a change from an unfolded state to the folded state of the foldable electronic device. The foldable electronic device may comprise an elastic member disposed between the third display part and the support plate, attached to the groove to be depressed by the bending region positioned within the space in the folded state of the foldable electronic device. The foldable electronic device may comprise a coating layer attached to the flexible display, and at least partially disposed between the bending region and the elastic member. The coating layer may be spaced apart from the elastic member in the unfolded state of the foldable electronic device, and may be in contact with the elastic member in the folded state of the foldable electronic device.

### [Description of the Drawings]

FIG. 1 is a block diagram of an electronic device in a network environment according to various embodiments.
FIG. 2A illustrates an unfolded state of an exemplary electronic device according to an embodiment.
FIG. 2B illustrates an example of a folded state of an exemplary electronic device according to an embodiment.
FIG. 2C is an exploded view of an exemplary electronic device according to an embodiment.
FIGS. 3A and 3B illustrate a portion of an exemplary electronic device in an unfolded state.
FIGS. 3C and 3D illustrate a portion of an exemplary electronic device in a folded state.
FIG. 4A is a partial cross-sectional view of an exemplary electronic device in an unfolded state cut along line A-A' of FIG. 2A.
FIG. 4B illustrates a portion of an exemplary electronic device.
FIG. 4C is a partial cross-sectional view of an exemplary electronic device in a folded state cut along line B-B' of FIG. 2B.
FIGS. 5A and 5B illustrate a portion of an exemplary electronic device in an unfolded state.
FIGS. 6A and 6B illustrate a portion of an exemplary electronic device in an unfolded state.
FIGS. 7A and 7B illustrate a movable center bar structure in an exemplary electronic device.
FIG. 8 illustrates a graph representing a characteristic of an elastic member of an exemplary electronic device.
FIG. 9A illustrates an exemplary electronic device in an unfolded state.
FIG. 9B illustrates an exemplary electronic device in a folded state.

### [Mode for Invention]

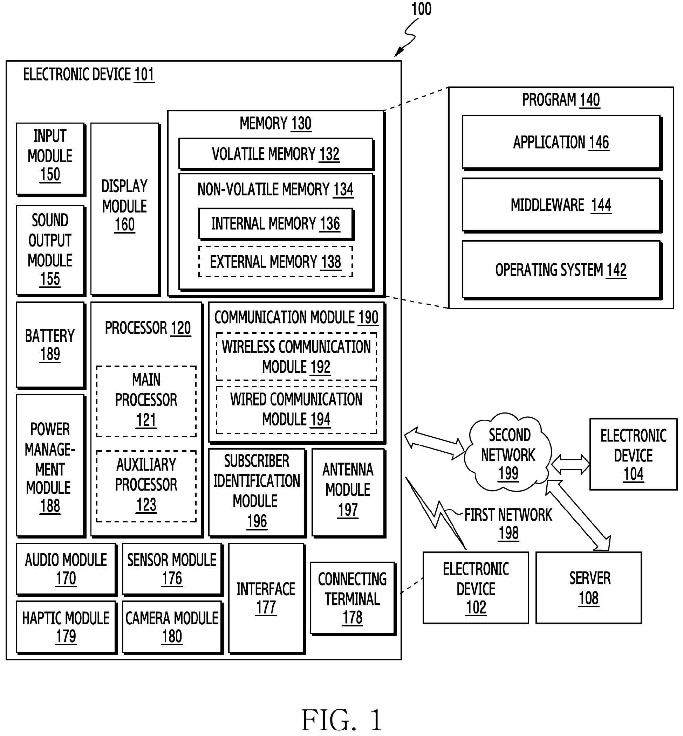

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

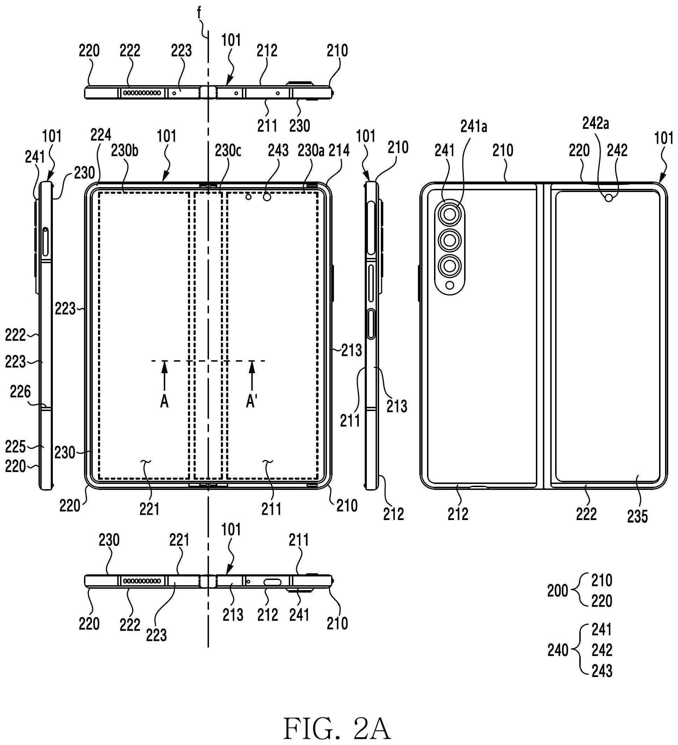

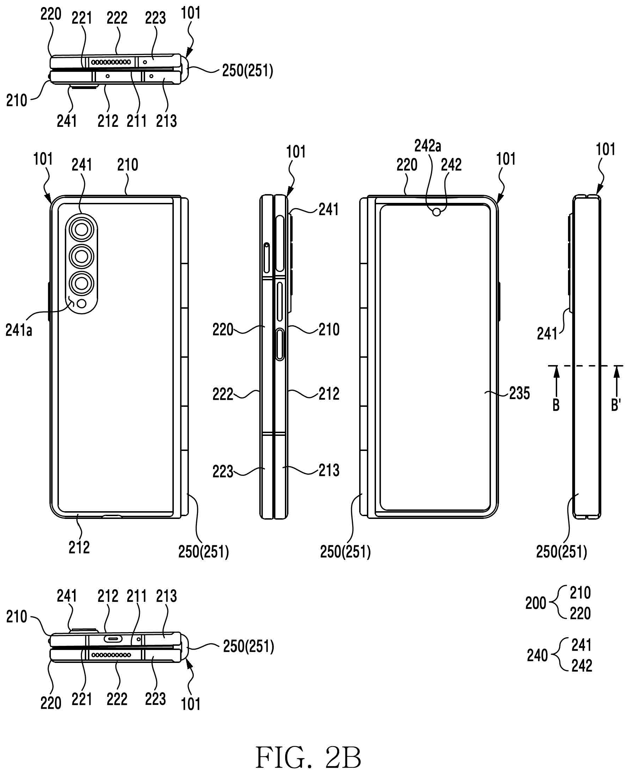

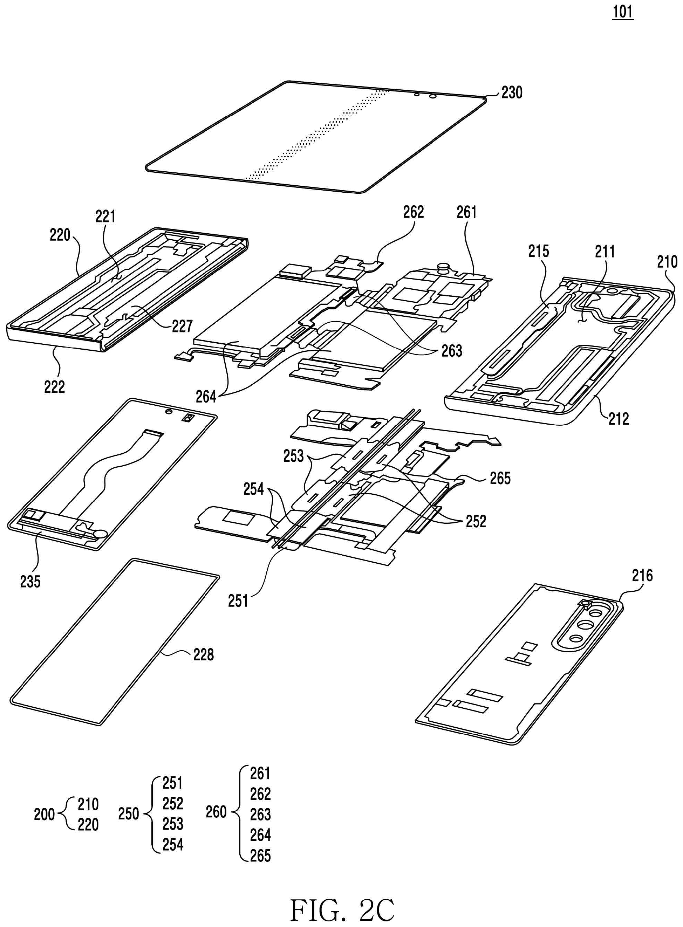

FIG. 2A illustrates an unfolded state of an exemplary electronic device according to an embodiment. FIG. 2B illustrates an example of a folded state of an exemplary electronic device according to an embodiment. FIG. 2C is an exploded view of an exemplary electronic device according to an embodiment.

Referring to FIGS. 2A, 2B, and 2C, an electronic device 101 may include a housing 200 including a first housing part 210 and a second housing part 220, a display 230, at least one camera 240 (e.g., the camera module 180 of FIG. 1), a hinge structure 250, and/or at least one electronic component 260.

The first housing part 210 and the second housing part 220 may form at least a portion of an outer surface of the electronic device 101 that may be gripped by a user. The at least a portion of the outer surface of the electronic device 101 defined by the first housing part 210 and the second housing part 220 may be in contact with a part of the user's body when the electronic device 101 is used by the user. According to an embodiment, the first housing part 210 may include a first front surface 211, a first rear surface 212 facing the first front surface 211 and spaced apart from the first front surface 211, and a first side surface 213 surrounding at least a portion of the first front surface 211 and the first rear surface 212. The first side surface 213 may connect a periphery of the first front surface 211 and a periphery of the first rear surface 212. The first front surface 211, the first rear surface 212, and the first side surface 213 may define an internal space of the first housing part 210. According to an embodiment, the first housing part 210 may provide the space formed by the first front surface 211, the first rear surface 212, and the first side surface 213 as a space for disposing components of the electronic device 101.

According to an embodiment, the second housing part 220 may include a second front surface 221, a second rear surface 222 facing the second front surface 221 and spaced apart from the second front surface 221, and a second side surface 223 surrounding at least a portion of the second front surface 221 and the second rear surface 222. The second side surface 223 may connect a periphery of the second front surface 221 and a periphery of the second rear surface 222. The second front surface 221, the second rear surface 222, and the second side surface 223 may define an internal space of the second housing part 220. According to an embodiment, the second housing part 220 may provide the space formed by the second front surface 221, the second rear surface 222, and the second side surface 223 surrounding at least a portion of the second front surface 221 and the second rear surface 222, as a space for mounting components of the electronic device 101. According to an embodiment, the second housing part 220 may be coupled to the first housing part 210 to be rotatable with respect to the first housing part 210.

According to an embodiment, each of the first housing part 210 and the second housing part 220 may include a first protective member 214 and a second protective member 224, respectively. The first protective member 214 and the second protective member 224 may be disposed on the first front surface 211 and the second front surface 221 along a periphery of the display 230. According to an embodiment, the first protective member 214 and the second protective member 224 may prevent inflow of a foreign substance (e.g., dust or moisture) through a gap between the display 230 and the first housing part 210 and the second housing part 220. For example, the first protective member 214 may surround a periphery of a first display region 230a of the display 230, and the second protective member 224 may surround a periphery of a second display region 230b of the display 230. The first protective member 214 may be formed by being attached to the first side surface 213 of the first housing part 210, or may be integrally formed with the first side surface 213. The second protective member 224 may be formed by being attached to the second side surface 223 of the second housing part 220, or may be integrally formed with the second side surface 223.

According to an embodiment, the first side surface 213 and the second side surface 223 may include a conductive material, a non-conductive material, or a combination thereof. For example, the second side surface 223 may include at least one conductive portion 225 and at least one non-conductive portion 226. The at least one conductive portion 225 may include a plurality of conductive portions each spaced apart from each other. The at least one non-conductive portion 226 may be disposed between the plurality of conductive portions. By the at least one non-conductive portion 226 disposed between the plurality of conductive portions, the plurality of conductive portions may be disconnected from each other. According to an embodiment, the plurality of conductive portions and a plurality of non-conductive portions may together form an antenna radiator. The electronic device 101 may be capable of communicating with an external electronic device through the antenna radiator formed by the plurality of conductive portions and the plurality of non-conductive portions.

The display 230 may be configured to display visual information. According to an embodiment, the display 230 may be disposed on the first front surface 211 of the first housing part 210 and the second front surface 221 of the second housing part 220 across the hinge structure 250. For example, the display 230 may include the first display region 230a disposed on the first front surface 211 of the first housing, the second display region 230b disposed on the second front surface 221 of the second housing, and a third display region 230c disposed between the first display region 230a and the second display region 230b. The first display region 230a, the second display region 230b, and the third display region 230c may form a front surface of the display 230. According to an embodiment, the display 230 may further include a sub display panel 235 disposed on the second rear surface 222 of the second housing part 220. For example, the display 230 may be referred to as a flexible display. According to an embodiment, the display 230 may include a window visually exposed toward the outside of the electronic device 101. The window may protect a surface of the display 230 and may transmit visual information provided by the display 230 to the outside of the electronic device 101 by including a substantially transparent material. For example, the window may include glass (e.g., ultra-thin glass (UTG)) and/or a polymer (e.g., polyimide (PI)), but is not limited thereto.

The at least one camera 240 may be configured to obtain an image based on receiving light from a subject outside the electronic device 101. According to an embodiment, the at least one camera 240 may include first cameras 241, a second camera 242, and/or a third camera 243. The first cameras 241 may be disposed in the first housing part 210. For example, the first cameras 241 may be disposed inside the first housing part 210, and at least a portion thereof may be visible through the first rear surface 212 of the first housing part 210. The first cameras 241 may be supported by a bracket (not illustrated) in the first housing part 210. The first housing part 210 may include at least one opening 241a overlapping the first cameras 241 when the first rear surface 212 is viewed from above. The first cameras 241 may obtain an image based on receiving light from the outside of the electronic device 101 through the at least one opening 241a.

According to an embodiment, the second camera 242 may be disposed in the second housing part 220. For example, the second camera 242 may be disposed inside the second housing part 220, and may be visible through the sub display panel 235. The second housing part 220 may include at least one opening 242a overlapping the second camera 242 when the second rear surface 222 is viewed from above. The second camera 242 may obtain an image based on receiving light from the outside of the electronic device 101 through the at least one opening 242a.

According to an embodiment, the third camera 243 may be disposed in the first housing part 210. For example, the third camera 243 may be disposed inside the first housing part 210, and at least a portion thereof may be visible through the first front surface 211 of the first housing part 210. For another example, the third camera 243 may be disposed inside the first housing part 210, and at least a portion thereof may be visible through the first display region 230a of the display 230. The first display region 230a of the display 230 may include at least one opening (not illustrated) overlapping the third camera 243 when the display 230 is viewed from above. The third camera 243 may obtain an image based on receiving light from the outside of the display 230 through the at least one opening.

According to an embodiment, the second camera 242 and the third camera 243 may be disposed under the display 230 (e.g., in a direction toward the inside of the first housing part 210 or the inside of the second housing part 220). For example, the second camera 242 and the third camera 243 may be under display cameras (UDCs). When the second camera 242 and the third camera 243 are the under display cameras, a region of the display 230 corresponding to a position of each of the second camera 242 and the third camera 243 may not be an inactive region. For example, when the second camera 242 and the third camera 243 are the under display cameras, the region of the display 230 corresponding to the position of each of the second camera 242 and the third camera 243 may have a pixel density lower than a pixel density of another region of the display 230. The inactive region of the display 230 may mean a region of the display 230 that does not include a pixel or does not emit light to the outside of the electronic device 101. For another example, the second camera 242 and the third camera 243 may be punch hole cameras. When the second camera 242 and the third camera 243 are the punch hole cameras, a region of the display 230 corresponding to a position of each of the second camera 242 and the third camera 243 may be an inactive region. For example, when the second camera 242 and the third camera 243 are the punch hole cameras, the region of the display 230 corresponding to the position of each of the second camera 242 and the third camera 243 may include an opening that does not include a pixel.

According to an embodiment, the hinge structure 250 may rotatably connect the first housing part 210 and the second housing part 220. The hinge structure 250 may be disposed between the first housing part 210 and the second housing part 220 of the electronic device 101 such that the electronic device 101 may be bent, curved, or folded. For example, the hinge structure 250 may be disposed between a portion of the first side surface 213 and a portion of the second side surface 223 facing each other. The hinge structure 250 may allow the electronic device 101 to be changed into an unfolded (unfolding) state in which directions in which the first front surface 211 of the first housing part 210 faces and the second front surface 221 of the second housing part 220 faces are substantially the same as each other, or a folded (folding) state in which the first front surface 211 and the second front surface 221 face each other. When the electronic device 101 is in the folded state, the first housing part 210 and the second housing part 220 may be stacked or overlapped by facing each other.

According to an embodiment, when the electronic device 101 is in the folded state, a direction in which the first front surface 211 faces and a direction in which the second front surface 221 faces may be different from each other. For example, when the electronic device 101 is in the folded state, the direction in which the first front surface 211 faces and the direction in which the second front surface 221 faces may be opposite to each other. For another example, when the electronic device 101 is in the folded state, the direction in which the first front surface 211 faces and the direction in which the second front surface 221 faces may be inclined with respect to each other. In a case that the direction in which the first front surface 211 faces is inclined with respect to the direction in which the second front surface 221 faces, the first housing part 210 may be inclined with respect to the second housing part 220. However, it is not limited thereto. For example, in the folded state of the electronic device 101, the first rear surface 212 of the first housing part 210 may face the second rear surface 222 of the second housing part 220. In a case that the first rear surface 212 and the second rear surface 222 face each other in the folded state of the electronic device 101, the direction in which the first front surface 211 faces and the direction in which the second front surface 221 faces may be opposite to each other. In a case that the first rear surface 212 and the second rear surface 222 face each other in the folded state of the electronic device 101, the display 230 may be visually exposed to the outside in the folded state of the electronic device 101.

According to an embodiment, the electronic device 101 may be foldable based on a folding axis f. The folding axis f may mean a virtual line extending through a hinge cover 251 in a direction substantially parallel to a longitudinal direction of the electronic device 101, but is not limited thereto. For example, the folding axis f may be a virtual line extending in a direction substantially perpendicular to the longitudinal direction of the electronic device 101. In a case that the folding axis f extends in the direction substantially perpendicular to the longitudinal direction of the electronic device 101, the hinge structure 250 may connect the first housing part 210 and the second housing part 220 by extending in a direction parallel to the folding axis f. The first housing part 210 and the second housing part 220 may be rotatable by the hinge structure 250 extending in the direction substantially perpendicular to the longitudinal direction of the electronic device 101.

According to an embodiment, the hinge structure 250 may include the hinge cover 251, a first hinge plate 252, a second hinge plate 253, and a hinge module 254. The hinge cover 251 may surround internal components of the hinge structure 250 and may form an outer surface of the hinge structure 250. According to an embodiment, when the electronic device 101 is in the folded state, at least a portion of the hinge cover 251, which surrounds the hinge structure 250, may be visually exposed to the outside of the electronic device 101 through a space between the first housing part 210 and the second housing part 220. According to an embodiment, when the electronic device 101 is in the unfolded state, the hinge cover 251 may be covered by the first housing part 210 and the second housing part 220 and may not be visually exposed to the outside of the electronic device 101.

According to an embodiment, the first hinge plate 252 and the second hinge plate 253 may rotatably connect the first housing part 210 and the second housing part 220 by being coupled to the first housing part 210 and the second housing part 220, respectively. For example, the first hinge plate 252 may be coupled to a first front bracket 215 of the first housing part 210, and the second hinge plate 253 may be coupled to a second front bracket 227 of the second housing part 220. As the first hinge plate 252 and the second hinge plate 253 are coupled to the first front bracket 215 and the second front bracket 227, respectively, the first housing part 210 and the second housing part 220 may be rotatable according to rotation of the first hinge plate 252 and the second hinge plate 253.

The hinge module 254 may rotate the first hinge plate 252 and the second hinge plate 253. For example, the hinge module 254 may rotate the first hinge plate 252 and the second hinge plate 253 based on the folding axis f by including gears rotatable by engaging with each other. According to an embodiment, the hinge module 254 may be a plurality. For example, the plurality of hinge modules 254 may each be disposed spaced apart from each other at both ends of the first hinge plate 252 and the second hinge plate 253.

According to an embodiment, the first housing part 210 may include the first front bracket 215 and a first rear bracket 216, and the second housing part 220 may include the second front bracket 227 and a second rear bracket 228. The first front bracket 215 and the first rear bracket 216 may support components of the electronic device 101. The first front bracket 215 may define the first housing part 210 by being coupled to the first rear bracket 216. The first rear bracket 216 may define a portion of an outer surface of the first housing part 210. The second front bracket 227 and the second rear bracket 228 may support components of the electronic device 101. The second front bracket 227 may define the second housing part 220 by being coupled to the second rear bracket 228. The second rear bracket 228 may define a portion of an outer surface of the second housing part 220. For example, the display 230 may be disposed on a surface of the first front bracket 215 and a surface of the second front bracket 227. The first rear bracket 216 may be disposed on another surface of the first front bracket 215 opposite to the surface of the first front bracket 215. The second rear bracket 228 may be disposed on another surface of the second front bracket 227 opposite to the surface of the second front bracket 227. The sub display panel 235 may be disposed between the second front bracket 227 and the second rear bracket 228.

According to an embodiment, a portion of the first front bracket 215 may be surrounded by the first side surface 213, and a portion of the second front bracket 227 may be surrounded by the second side surface 223. For example, the first front bracket 215 may be integrally formed with the first side surface 213, and the second front bracket 227 may be integrally formed with the second side surface 223. For another example, the first front bracket 215 may be formed separately from the first side surface 213, and the second front bracket 227 may be formed separately from the second side surface 223.

The at least one electronic component 260 may implement various functions for providing to the user. According to an embodiment, the at least one electronic component 260 may include a first printed circuit board 261, a second printed circuit board 262, a flexible printed circuit board 263, a battery 264 (e.g., the battery 189 of FIG. 1), and/or an antenna 265 (e.g., the antenna module 197 of FIG. 1). The first printed circuit board 261 and the second printed circuit board 262 may each form an electrical connection of components in the electronic device 101. For example, components (e.g., the processor 120 of FIG. 1) for implementing overall functions of the electronic device 101 may be disposed on the first printed circuit board 261, and at least one electronic component for implementing some functions of the first printed circuit board 261 may be disposed on the second printed circuit board 262. For another example, components for an operation of the sub display panel 235 disposed on the second rear surface 222 may be disposed on the second printed circuit board 262.

According to an embodiment, the first printed circuit board 261 may be disposed in the first housing part 210. For example, the first printed circuit board 261 may be disposed on a surface of the first front bracket 215. According to an embodiment, the second printed circuit board 262 may be disposed in the second housing part 220. For example, the second printed circuit board 262 may be spaced apart from the first printed circuit board 261, and may be disposed on a surface of the second front bracket 227. The flexible printed circuit board 263 may connect the first printed circuit board 261, and the second printed circuit board 262. For example, the flexible printed circuit board 263 may extend from the first printed circuit board 261 to the second printed circuit board 262.

The battery 264 is a device for supplying power to at least one component of the electronic device 101, and may include, for example, a non-rechargeable primary battery, or a rechargeable secondary battery, or a fuel cell. At least a portion of the battery 264 may be disposed on substantially the same flat surface as the first printed circuit board 261 or the second printed circuit board 262.

The antenna 265 may be configured to receive power or a signal from the outside of the electronic device 101. According to an embodiment, the antenna 265 may be disposed between the first rear bracket 216 and the battery 264. The antenna 265 may include, for example, a near field communication (NFC) antenna, an antenna module, and/or a magnetic secure transmission (MST) antenna. The antenna 265 may, for example, perform near field communication with an external device or wirelessly transmit and receive power required for charging.

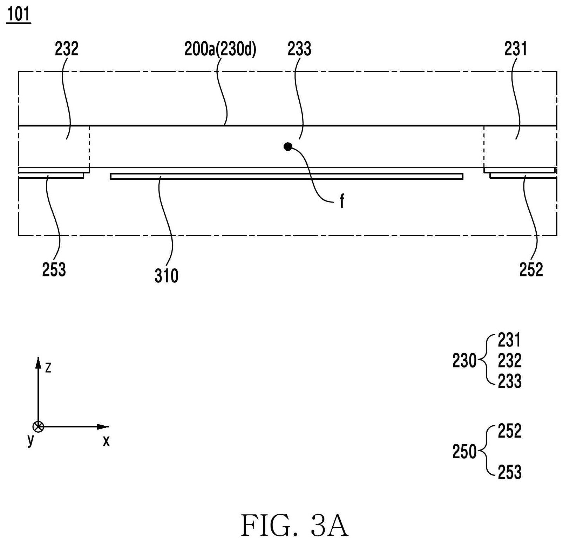

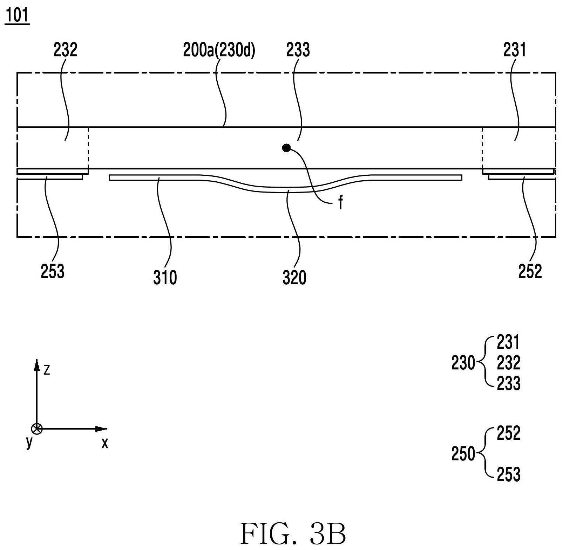

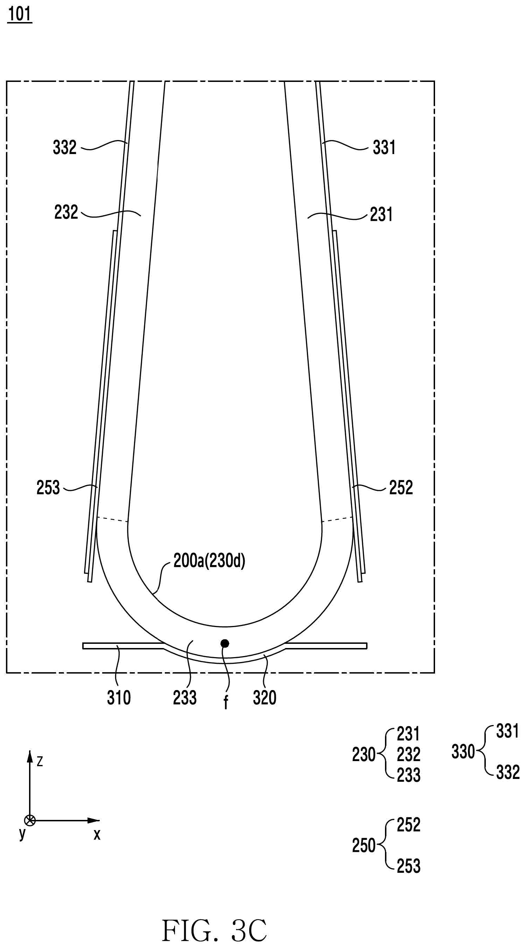

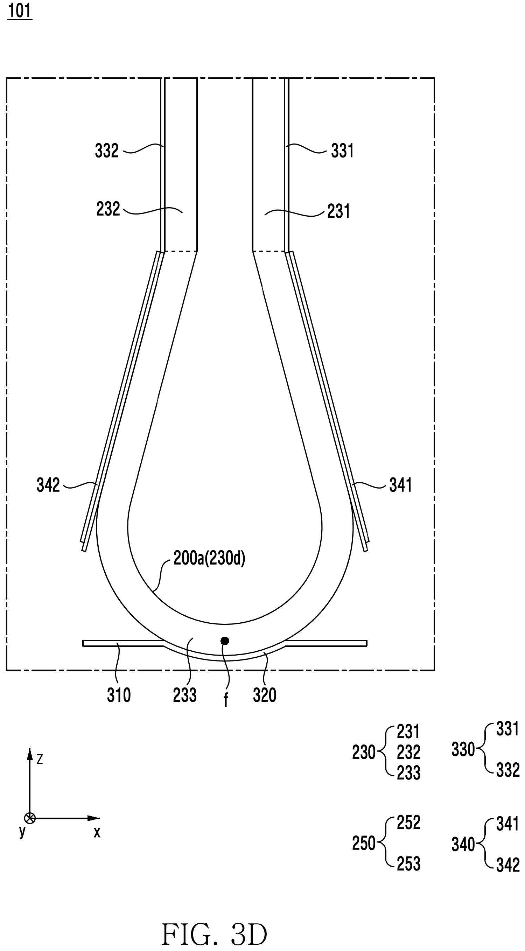

FIGS. 3A and 3B illustrate a portion of an exemplary electronic device in an unfolded state. FIGS. 3C and 3D illustrate a portion of an exemplary electronic device in a folded state.

Referring to FIGS. 3A, 3B, 3C, and 3D, an electronic device 101 may include a housing (e.g., the housing 200 of FIG. 2A) including a first housing part (e.g., the first housing part 210 of FIG. 2A) and a second housing part (e.g., the second housing part 220 of FIG. 2A), a flexible display 230, a hinge structure 250, and a support plate 310 in the housing 200.

The electronic device 101 may be referred to as a foldable electronic device in terms of being changeable into a plurality of states including an unfolded state and a folded state.

The unfolded state of the electronic device 101 may be a state in which the display 230 of the electronic device 101 is unfolded. For example, the unfolded state may be a state in which a first region 231, a second region 232, and a bending region 233 form a substantially flat surface. For example, the unfolded state may be a state in which a direction in which a first display region (e.g., the first display region 230a of FIG. 2A) and a second display region (e.g., the second display region 230b of FIG. 2A) of the display 230 face is substantially the same. For example, the unfolded state may be a state in which an angle between the first region 231 and the second region 232 has a maximum value (e.g., approximately 180 degrees). For example, the unfolded state may be a state in which a distance between a recess 320 of the support plate 310 and the bending region 233 has a maximum value as the bending region 233 moves toward the outside of the electronic device 101 (e.g., moves in a +z direction). For example, the unfolded state may be a state in which the bending region 233 has a minimum curvature. For example, the unfolded state may be a state in which the bending region 233 has a maximum radius of curvature.

The folded state of the electronic device 101 may be a state in which the display 230 of the electronic device 101 is fully folded. For example, the folded state may be a state in which the first region 231 and the second region 232 of the display 230 are in contact with each other. For example, the folded state may be a state in which an angle between the first region 231 and the second region 232 has a minimum value (e.g., 0 degrees). For example, the folded state may be a state in which a distance between the recess 320 of the support plate 310 and the bending region 233 has a minimum value as the bending region 233 moves toward the inside of the housing 200 (e.g., moves in a -z direction). For example, the folded state may be a state in which the bending region 233 has a maximum curvature. For example, the folded state may be a state in which the bending region 233 has a minimum radius of curvature.

Although not illustrated, the electronic device 101 may be in intermediate states between the unfolded state and the folded state. For example, the intermediate states may be semi folded states of the display 230 of the electronic device 101. For example, the electronic device 101 may be in the intermediate states while being changed from the unfolded state to the folded state or while being changed from the folded state to the folded state. For example, the intermediate states may be states in which the first region 231 and the second region 232 are spaced apart and the first display region 230a and the second display region 230b of FIG. 2A face each other at a specified angle. For example, the intermediate states may be states in which an angle between the first region 231 and the second region 232 is located within a range between approximately 0 degrees and approximately 180 degrees.

The display 230 may form at least a portion of a front surface 200a of the housing 200. The display 230 may include the first region 231, the second region 232 spaced apart from the first region 231, and the bending region 233 positioned between the first region 231 and the second region 232. The bending region 233 may be configured to be bent in the folded state of the electronic device 101.

For example, the first region 231 may at least partially form the first housing part 210. The first region 231 may be coupled to the first housing part 210. The first region 231 may be at least partially surrounded by the first housing part 210. The first region 231 may be a portion for the first display region 230a of the display 230. For example, the second region 232 may at least partially form the second housing part 220. The second region 232 may be coupled to the second housing part 220. The second region 232 may be at least partially surrounded by the second housing part 220. The second region 232 may be a portion for the second display region 230b of the display 230.

For example, the first region 231 and the second region 232 may be portions that are not deformed while the electronic device 101 is changed from the unfolded state to the folded state or from the folded state to the unfolded state. For example, the first region 231 and the second region 232 may be referred to as substantially flat parts, but are not limited thereto.

For example, the bending region 233 may extend from the first region 231 to the second region 232 over the hinge structure 250. For example, an end (one end) of the bending region 233 may be connected to the first region 231, and another end opposite to the end of the bending region 233 may be connected to the second region 232. For example, the bending region 233 may face the support plate 310. For example, the bending region 233 may be a deformable portion by having flexibility. For example, the bending region 233 may rotatably connect the second region 232 to the first region 231 by being deformed while the electronic device 101 is changed from the folded state to the unfolded state or from the unfolded state to the folded state. For example, the bending region 233 may be referred to as a folding part in terms of providing a folding axis f of the display 230 such that the display 230 is foldable, but is not limited thereto.

For example, the bending region 233 may be bent by being pressed by the first region 231 and the second region 232 while the electronic device 101 is changed from the unfolded state to the folded state. The bending region 233 may be unfolded by being tensioned by the first region 231 and the second region 232 while the electronic device 101 is changed from the folded state to the unfolded state. For example, the bending region 233 may at least partially move toward the inside of the housing 200 (e.g., in the -z direction) while the electronic device 101 is changed from the unfolded state to the folded state. The bending region 233 may at least partially move toward the outside of the electronic device 101 (e.g., in the +z direction) while the electronic device 101 is changed from the folded state to the unfolded state. The bending region 233 may reduce damage and/or plastic deformation of the bending region 233 due to the first region 231 and the second region 232 by moving at least partially while the electronic device 101 is changed from the unfolded state to the folded state or from the folded state to the unfolded state.

The hinge structure 250 may be positioned under the display 230. The hinge structure 250 may rotatably connect the second housing part 220 to the first housing part 210. For example, the hinge structure 250 may be at least partially disposed between the first housing part 210 and the second housing part 220. The hinge structure 250 may rotatably couple the second housing part 220 to the first housing part 210. For example, the hinge structure 250 may at least partially overlap the bending region 233 when viewed from above (e.g., when viewed in the +z direction). For example, the hinge structure 250 may be disposed along the folding axis f of the display 230. For example, the hinge structure 250 may extend from the inside of the first housing part 210 to the inside of the second housing part 220. For example, the hinge structure 250 may provide a plurality of states including the unfolded state and the folded state of the electronic device 101 by rotatably coupling the first housing part 210 and the second housing part 220.

For example, the hinge structure 250 may include a hinge cover (e.g., the hinge cover 251 of FIG. 2C), a first hinge plate 252, and a second hinge plate 253. For example, the hinge cover 251 may be at least partially exposed to the outside of the electronic device 101 while the electronic device 101 is changed from the unfolded state to the folded state. The hinge cover 251 may cover the support plate 310. The hinge cover 251 may be a portion of the hinge structure 250 overlapping the bending region 233 when the display 230 is viewed from above (e.g., when viewed in the +z direction).

For example, referring to FIGS. 2B and 2C, the first hinge plate 252 may be disposed in the first housing part 210. The first hinge plate 252 may be at least partially attached to the first region 231. The second hinge plate 253 may be disposed in the second housing part 220. The second hinge plate 253 may be at least partially attached to the second region 232. For example, the electronic device 101 may include a bracket 330 for supporting the display 230. The first hinge plate 252 may be coupled to a first bracket 331 supporting the first region 231. The second hinge plate 253 may be coupled to a second bracket 332 supporting the second region 232. For example, the support plate 310 may be at least partially disposed between the first hinge plate 252 and the second hinge plate 253 in the unfolded state of the electronic device 101. The second hinge plate 253 may rotate the second region 232 with respect to the first region 231 by being rotatable with respect to the first hinge plate 252. The hinge structure 250 may deform the bending region 233 between the first region 231 and the second region 232 by rotating the second region 232 with respect to the first region 231.

For example, referring to FIG. 3D, the electronic device 101 may include the bracket 330 for supporting the display 230, and a wing plate 340 connected to the bracket 330. Although not illustrated in FIG. 3D, the first hinge plate 252 and the second hinge plate 253 may be coupled to the bracket 330 and the wing plate 340, respectively. For example, the first bracket 331 (e.g., the first front bracket 215 of FIG. 2C) may be disposed in the first housing part 210 and may support the first region 231 of the display 230. A first wing plate 341 of the wing plate 340 may be connected to the first bracket 331 and may support the bending region 233 of the display 230. For example, the second bracket 332 (e.g., the second front bracket 227 of FIG. 2C) may be disposed in the second housing part 220 and may support the second region 232 of the display 230. A second wing plate 342 of the wing plate 340 may be connected to the second bracket 332 and may support the bending region 233 of the display 230. For example, the first wing plate 341 and the second wing plate 342 may face each other and be separated. For example, the first hinge plate 252 may be coupled to the first wing plate 341. The second hinge plate 253 may be coupled to the second wing plate 342.

The support plate 310 may be coupled to the hinge structure 250. The support plate 310 may include the recess 320 facing the bending region 233 and providing a space (internal volume) for the bending region 233 moving according to a change from the unfolded state to the folded state of the electronic device 101.

For example, the support plate 310 may be surrounded by the hinge structure 250. The support plate 310 may be covered by the hinge cover 251 of the hinge structure 250. For example, the support plate 310 may be disposed between the hinge cover 251 and the bending region 233. For example, the support plate 310 may extend along the folding axis f of the display 230. For example, the support plate 310 may at least partially overlap the bending region 233 when the display 230 is viewed from above (e.g., when viewed in the +z direction). For example, the support plate 310 may be spaced apart from the bending region 233 in the unfolded state of the electronic device 101. The support plate 310 may support the bending region 233 by being in contact with the bending region 233 moving toward the support plate 310 in the folded state of the electronic device 101. For example, when referring to FIG. 3A, the support plate 310 may reduce sinkage of the bending region 233 in the folded state by being configured to support the bending region 233 in the folded state of the electronic device 101, but a structure for reducing damage (e.g., a crease or distortion) of the bending region 233 due to rigidity of the support plate 310 may be required.

For example, referring to FIG. 3B, the recess 320 may be dented from the support plate 310 toward the hinge cover 251 of the hinge structure 250 (e.g., in the -z direction). For example, the recess 320 may be formed along the folding axis f of the display 230. The recess 320 may overlap the folding axis f when the display 230 is viewed from above (e.g., when viewed in the +z direction). For example, the recess 320 may face a portion of the bending region 233 providing the folding axis f of the display 230.

For example, the bending region 233 may be positioned outside the recess 320 in the unfolded state of the electronic device 101. While the electronic device 101 is changed from the unfolded state to the folded state, the recess 320 may accommodate, in a space of the recess 320, at least a portion of the bending region 233 moving toward the support plate 310 (or the recess 320) (e.g., moving in the -z direction). The support plate 310 may reduce damage of the bending region 233 due to rigidity of the support plate 310 by including the recess 320 providing the space for the bending region 233 moving toward the support plate 310 while the electronic device 101 is changed from the unfolded state to the folded state.

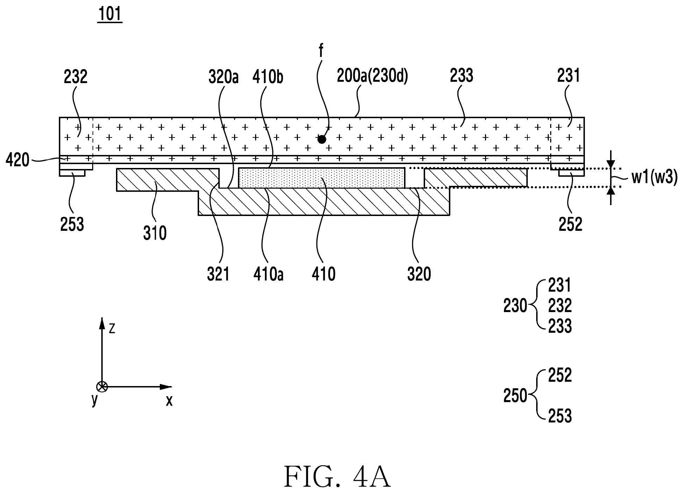

In the folded state of the electronic device 101, in a case that a portion of the bending region 233 is spaced apart from an inner surface of the recess 320 in the space of the recess 320, damage (e.g., sinkage in the -z direction or plastic deformation) may occur in the bending region 233 due to a gap between the inner surface of the recess 320 and the bending region 233. In a case that the portion of the bending region 233 is in contact with the inner surface of the recess 320 in the space of the recess 320, damage (e.g., a crease or distortion) may occur in the bending region 233 due to rigidity of the support plate 310. In order to reduce damage of the bending region 233 while the electronic device 101 is changed from the unfolded state to the folded state, a structure for guiding deformation of the bending region 233 while supporting the bending region 233 will be described later below in FIG. 4A and following drawings.

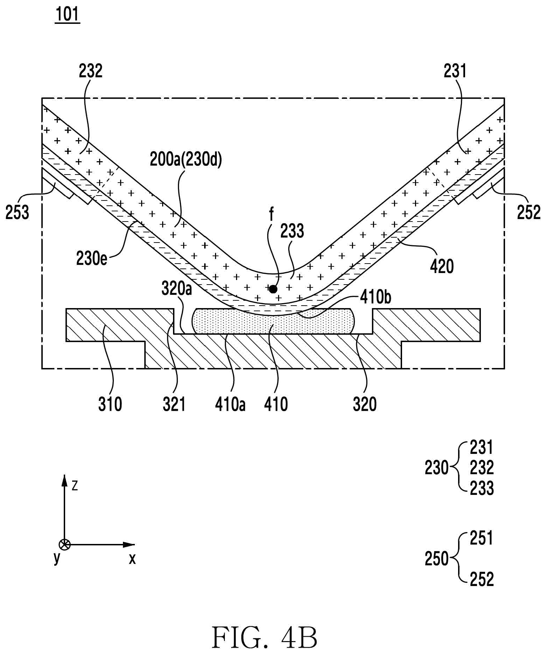

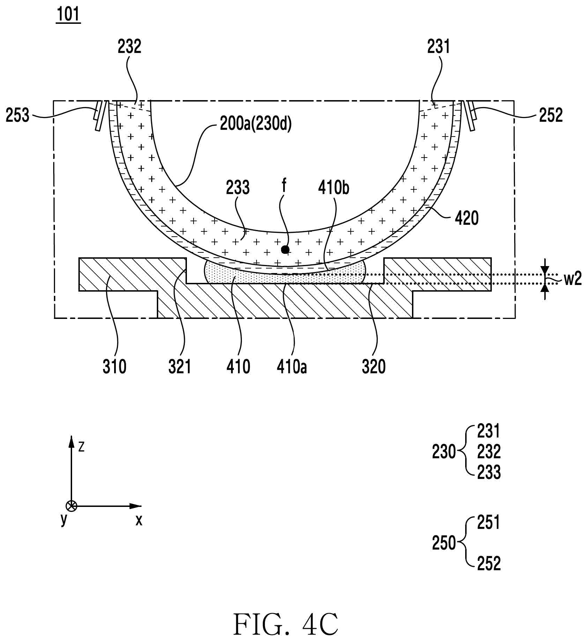

FIG. 4A is a partial cross-sectional view of an exemplary electronic device in an unfolded state cut along line A-A' of FIG. 2A. FIG. 4B illustrates a portion of an exemplary electronic device. FIG. 4C is a partial cross-sectional view of an exemplary electronic device in a folded state cut along line B-B' of FIG. 2B.

Referring to FIGS. 4A, 4B, and 4C, an electronic device 101 may include a housing (e.g., the housing 200 of FIG. 2A) including a first housing part (e.g., the first housing part 210 of FIG. 2A) and a second housing part (e.g., the second housing part 220 of FIG. 2A). The electronic device 101 may include a display 230 forming at least a portion of a front surface 200a of the housing 200, and including a first region 231, a second region 232 spaced apart from the first region 231, and a bending region 233 positioned between the first region 231 and the second region 232 and configured to be bent in a folded state of the foldable electronic device 101. The electronic device 101 may include a hinge structure 250 positioned under the flexible display 230 and rotatably connecting the second housing part 220 to the first housing part 210. The electronic device 101 may include a support plate 310 in the housing 200, coupled to the hinge structure 250, and including a recess 320 facing the bending region 233 and providing a space for the bending region 233 moving according to a change from an unfolded state to the folded state of the foldable electronic device 101.

Hereinafter, descriptions of overlapping configurations having the same reference numerals described above in FIGS. 3A and 3B will be omitted.

According to an embodiment, the electronic device 101 may include an elastic member 410 disposed between the bending region 233 and the support plate 310, and attached to the recess 320 to be depressed by the bending region 233 positioned in the space of the recess 320 in the folded state of the foldable electronic device 101.

For example, the elastic member 410 may be at least partially disposed in the recess 320. The elastic member 410 may be partially surrounded by the recess 320. For example, the recess 320 may include at least one step portion 321 for the space. The elastic member 410 may be surrounded by the at least one step portion 321 of the recess 320. For example, the elastic member 410 may be attached to a surface 320a of the recess 320 facing the bending region 233. For example, the elastic member 410 may at least partially fill the space of the recess 320. For example, the elastic member 410 may be disposed along a folding axis f of the display 230 provided by the bending region 233. The elastic member 410 may be disposed in a space between the bending region 233 and the support plate 310 or a space formed by the bending region 233 and a space of the recess 320. For example, the elastic member 410 may be supported by the support plate 310 by being attached to the recess 320.

For example, referring to FIGS. 4A, 4B, and 4C in order, the elastic member 410 may be depressed by the bending region 233 moving toward the inside of the recess 320 while the electronic device 101 changes from the unfolded state to a bent state. For example, the elastic member 410 may be pressed in a -z direction by the bending region 233 moving toward the support plate 310 while the electronic device 101 changes from the unfolded state to the folded state. The elastic member 410 may be deformed by being pressed by the bending region 233.

For example, referring to FIGS. 4C, 4B, and 4A in order, the elastic member 410 may be spaced apart from the bending region 233 by the bending region 233 moving toward the outside of the recess 320 while the electronic device 101 is changed from the bent state to the unfolded state. For example, as the pressing from the bending region 233 is released by the bending region 233 moving in a +z direction while the electronic device 101 is changed from the bent state to the unfolded state, the elastic member 410 may be restored to a state before the pressing.

For example, the elastic member 410 may press, by a repulsive force, the bending region 233 in a direction (e.g., the -z direction) opposite to a pressing direction (e.g., the +z direction) of the bending region 233 by being pressed by the bending region 233 positioned in the space of the recess 320. The elastic member 410 may reduce damage of the bending region 233 by supporting the bending region 233. The elastic member 410 may reduce damage of the bending region 233 by the support plate 310 by being deformed by the bending region 233.

For example, the elastic member 410 may support the bending region 233 by being in contact with the bending region 233 in intermediate states between the unfolded state and the folded state while the electronic device 101 is changed from the unfolded state to the folded state or from the folded state to the unfolded state. In a case that the elastic member 410 is omitted, even when the recess 320 provides a space for the bending region 233 to have a shape corresponding to the bending region 233 in the folded state of the electronic device 101, damage (e.g., sinkage in the -z direction) may occur in the bending region 233 due to a gap between the bending region 233 and the recess 320 (or the support plate 310) in the intermediate states. The electronic device 101 may reduce damage of the bending region 233 deformed according to a folding operation of the electronic device 101 by supporting the bending region 233 in each of a plurality of states including the folded state of the electronic device 101 through the elastic member 410 attached to the recess 320 of the support plate 310.

According to an embodiment, the elastic member 410 may be configured to have a contact area with the bending region 233 which varies along the bending region 233 moving toward the support plate 310 while the electronic device 101 is changed from the unfolded state to the folded state. It should be noted that, when it is stated in this document that an element is contacted with another element, it includes not only that the element is directly contacted with the another element but also that the element is contacted with the another element through an intermediate element between the element and the another element, and thus does not limit a disposition relation between the element and the another element.

For example, the elastic member 410 may be spaced apart from the bending region 233 in the unfolded state of the electronic device 101. The elastic member 410 may support the bending region 233 by being in contact with the bending region 233 moving toward the elastic member 410 while the electronic device 101 is changed from the unfolded state to the folded state. For example, the elastic member 410 may be configured to have a contact area with the bending region 233 which increases while the electronic device 101 is changed from the unfolded state to the folded state. For example, the elastic member 410 may be configured to have a contact area with the bending region 233 which decreases while the electronic device 101 is changed from the folded state to the unfolded state.

According to an embodiment, the elastic member 410 may be deformed by being in contact with the bending region 233 while the electronic device 101 is changed from the unfolded state to the folded state, and may be restored to a restoration rate located within a range of approximately 90% to approximately 99% by being spaced apart from the bending region 233 while the electronic device 101 is changed from the folded state to the unfolded state. For example, the elastic member 410 may be dented toward the support plate 310 by being pressed by the bending region 233 moving toward the elastic member 410 while the electronic device 101 is changed from the unfolded state to the folded state. For example, the elastic member 410 may be deformed by being compressed by the bending region 233.

For example, a thickness w of the elastic member 410 based on the folding axis f of the display 230 may be changed from a first thickness w1 to a second thickness w2 smaller than the first thickness w1 by pressing by the bending region 233 while the electronic device 101 is changed from the unfolded state to the folded state. As the pressing by the bending region 233 is released while the electronic device 101 is changed from the folded state to the unfolded state, the elastic member 410 may be changed from the second thickness w2 to a third thickness w3. The restoration rate of the elastic member 410 may mean a ratio of the third thickness w3 to the first thickness w1. The elastic member 410 may continuously support the bending region 233 while the electronic device 101 performs a folding operation, by having the restoration rate of approximately 90% to approximately 99%.

According to an embodiment, the elastic member 410 may include a first surface 410a attached on the surface 320a of the recess 320 facing the bending region 233, and a second surface 410b opposite to the first surface 410a and in contact with the bending region 233 in the folded state of the electronic device 101. The second surface 410b may be dented toward the first surface 410a by the bending region 233 while the electronic device 101 is changed from the unfolded state to the folded state. The second surface 410b may move toward the bending region 233 while the electronic device 101 is changed from the folded state to the unfolded state. For example, the first surface 410a of the elastic member 410 may be a surface supported by the support plate 310. The second surface 410b opposite to the first surface 410a may be dented toward the support plate 310 by being pressed by the bending region 233 moving toward the support plate 310 while the electronic device 101 is changed from the unfolded state to the folded state. The thickness w of the elastic member 410 between the first surface 410a and the second surface 410b may decrease. For example, the second surface 410b may move toward the bending region 233 by a restoring force of the elastic member 410 while the electronic device 101 is changed from the folded state to the unfolded state. The thickness w of the elastic member 410 between the first surface 410a and the second surface 410b may increase.

According to an embodiment, the second surface 410b of the elastic member 410 may have a shape corresponding to a shape of at least a portion of the bending region 233 which is bent in the folded state of the electronic device 101. For example, the elastic member 410 may have a shape corresponding to a shape of a portion of the bending region 233 in contact with the elastic member 410 while the electronic device 101 is changed from the unfolded state to the folded state. For example, the second surface 410b of the elastic member 410 configured to be in contact with the bending region 233 may be dented to a shape corresponding to a shape of a bent portion of the bending region 233 in contact with the elastic member 410 while the electronic device 101 is changed from the unfolded state to the folded state. The second surface 410b may maintain a shape of the bending region 233 and support the bending region 233 while the electronic device 101 performs a folding operation, by having a shape corresponding to a shape of the bending region 233 by pressing of the bending region 233.

According to an embodiment, the elastic member 410 may include polyurethane (PU) foam. However, it is not limited thereto, and a characteristic of the elastic member 410 may be adjusted to have a restoration rate within a specified range according to pressing from the bending region 233 and release of the pressing while the electronic device 101 performs a folding operation. For example, the elastic member 410 may include rubber, but is not limited thereto.

According to an embodiment, the bending region 233 may be spaced apart from the support plate 310 by the elastic member 410 interposed between the recess 320 and the bending region 233 in the folded state of the electronic device 101. For example, the elastic member 410 may space the bending region 233 apart from the support plate 310 by pressing the bending region 233 in a direction opposite to a pressing direction (e.g., the +z direction) of the bending region 233 by a repulsive force while the electronic device 101 is changed from the unfolded state to the folded state. For example, in the folded state of the electronic device 101, as the first surface 410a of the elastic member 410 is attached to the recess 320 and the second surface 410b opposite to the first surface 410a is in contact with the bending region 233, the elastic member 410 may separate the bending region 233 from the support plate 310. The elastic member 410 may reduce damage as the bending region 233 is in contact with the support plate 310, by spacing the bending region 233 apart from the support plate 310 while the electronic device 101 performs a folding operation.

According to an embodiment, the electronic device 101 may include a coating layer 420 attached to a rear surface 230e of the display 230 facing the hinge structure 250 and at least partially disposed between the bending region 233 and the elastic member 410. For example, the coating layer 420 may be attached on the rear surface 230e opposite to a front surface 230d of the display 230 visually exposed to the outside of the electronic device 101. The coating layer 420 may cover at least a portion of the rear surface 230e of the display 230. For example, at least a portion of the coating layer 420 may be attached to the bending region 233. The coating layer 420 may be deformed along the bending region 233 deformed while the electronic device 101 performs a folding operation. For example, the coating layer 420 may be bent to a shape corresponding to a shape of the bending region 233 which is bent while the electronic device 101 is changed from the unfolded state to the folded state. For example, the coating layer 420 may be deposited on the rear surface 230e of the display 230.

For example, the coating layer 420 may be spaced apart from the elastic member 410 in the unfolded state of the electronic device 101. The coating layer 420 may be in contact with the elastic member 410 in the folded state of the electronic device 101. For example, while the electronic device 101 is changed from the unfolded state to the folded state, the elastic member 410 may be configured to have a contact area with the coating layer 420 which varies along the bending region 233 moving toward the support plate 310. For example, the elastic member 410 may be restored to a restoration rate located within a range of 90% to 99% by being spaced apart from the coating layer 420 while the electronic device 101 is changed from the folded state to the unfolded state. For example, at least a portion of the coating layer 420 may be interposed between the elastic member 410 and the bending region 233 by the bending region 233 positioned in the space of the recess 320 as the electronic device 101 performs a folding operation. For example, the coating layer 420 may separate the bending region 233 from the elastic member 410 by being attached to the rear surface 230e of the display 230. The electronic device 101 may reduce noise and/or damage of the bending region 233 due to friction between the bending region 233 and the elastic member 410 by including the coating layer 420 configured to be in contact with the elastic member 410.

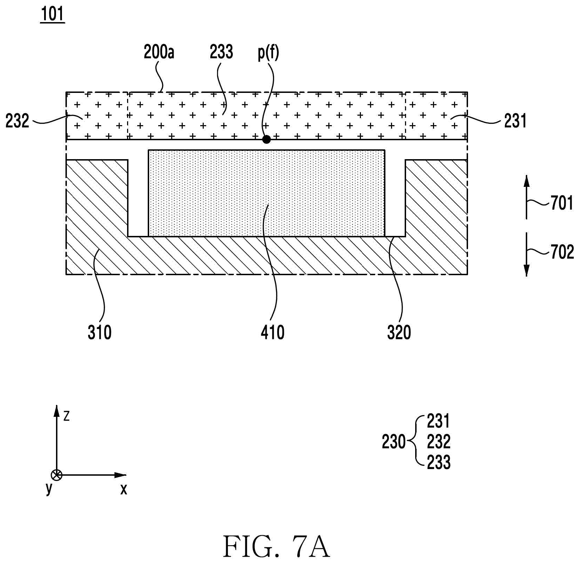

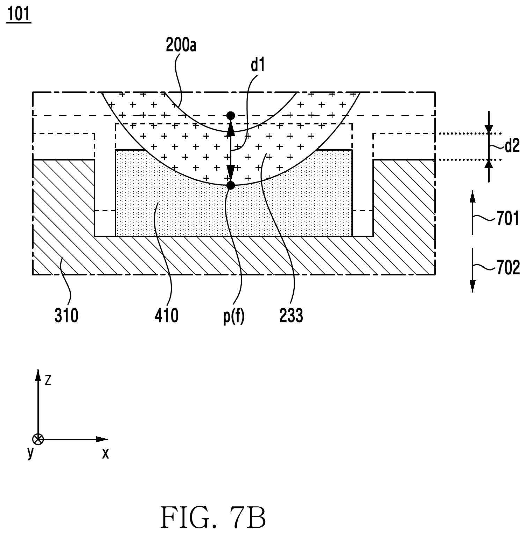

According to an embodiment, the support plate 310 may be referred to as a center bar. The support plate 310 may be configured to be stationary such that there is no vertical movement of the support plate 310 while changing between the unfolded state and the folded state of the electronic device 101. The vertical movement of the support plate 310 may mean movement of the support plate 310 in the housing 200 in a direction (e.g., a first direction 701 of FIG. 7A) toward the display 230, or movement in a direction (e.g., a second direction 702 of FIG. 7B) opposite to a direction toward the display 230. For example, the support plate 310 may be configured such that a position thereof in the housing 200 is to be stationary while the electronic device 101 is changed from the unfolded state to the folded state or from the folded state to the unfolded state.

According to the embodiment described above, the electronic device 101 may support the bending region 233 deformed while the electronic device 101 performs a folding operation and may reduce damage of the bending region 233 by including the elastic member 410 attached to the recess 320 of the support plate 310. The electronic device 101 may reduce noise and damage of the bending region 233 due to friction between the bending region 233 and the elastic member 410 by including the coating layer 420 attached to the display 230.

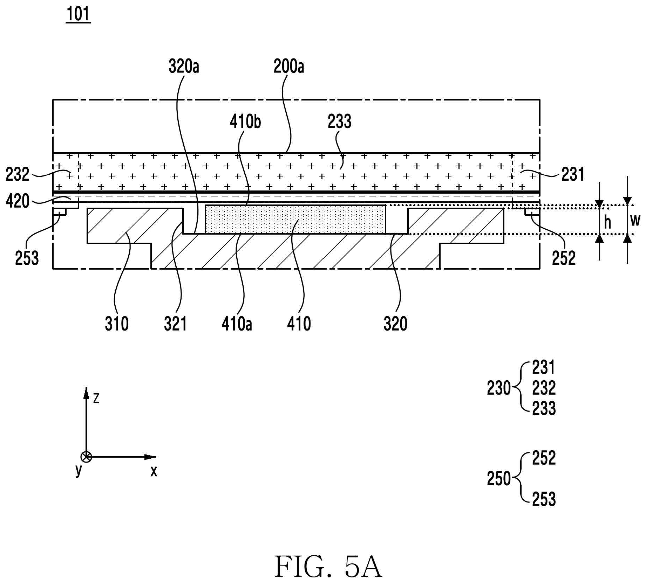

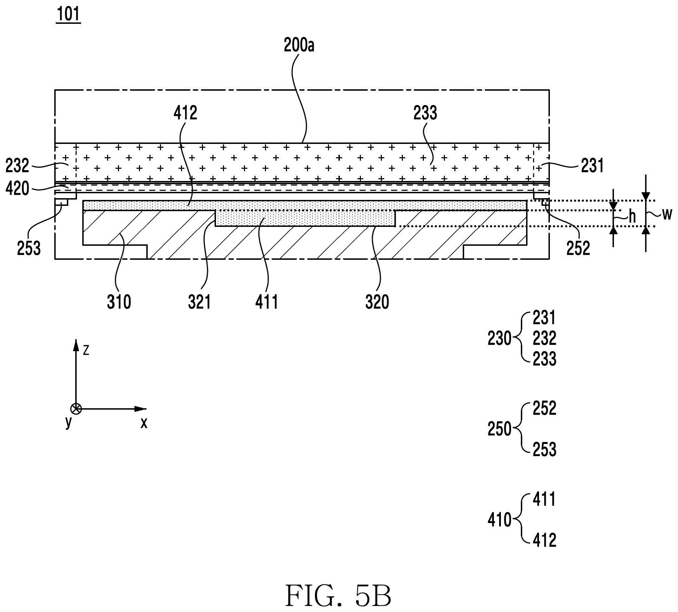

FIGS. 5A and 5B illustrate a portion of an exemplary electronic device in an unfolded state.

Referring to FIGS. 5A and 5B, an electronic device 101 may include a housing 200 including a first housing part (e.g., the first housing part 210 of FIG. 2A) and a second housing part (e.g., the second housing part 220 of FIG. 2A). The electronic device 101 may include a display 230 forming at least a portion of a front surface 200a of the housing 200, and including a first region 231, a second region 232 spaced apart from the first region 231, and a bending region 233 positioned between the first region 231 and the second region 232 and configured to be bent in a folded state of the electronic device 101. The electronic device 101 may include a hinge structure (e.g., the hinge structure 250 of FIG. 2C) positioned under the display 230 and rotatably connecting the second housing part 220 to the first housing part 210. The electronic device 101 may include a support plate 310 in the housing 200, coupled to the hinge structure 250, and including a recess 320 facing the bending region 233 and providing a space for the bending region 233 moving according to a change of the electronic device 101 from an unfolded state to the folded state. The electronic device 101 may include an elastic member 410 disposed between the bending region 233 and the support plate 310, and attached to the recess 320 to be depressed by the bending region 233 positioned in the space in the folded state of the electronic device 101. According to an embodiment, the electronic device 101 may include a coating layer 420 attached to a rear surface 230e of the flexible display 230 facing the hinge structure 250, and at least partially disposed between the bending region 233 and the elastic member 410.

According to an embodiment, a thickness w of the elastic member 410 from the recess 320 toward the bending region 233 may be equal to a depth h of the recess 320 for the space of the recess 320 or may be greater than the depth h of the recess 320. For example, the recess 320 may include at least one step portion 321 for the space of the recess 320. The depth h of the recess 320 may correspond to a height of the at least one step portion 321. The thickness w of the elastic member 410 attached to the recess 320 may be equal to the height of the at least one step portion 321 or may be greater than the height of the at least one step portion 321. For example, the depth h of the recess 320 formed from the support plate 310 to a surface 320a of the recess 320 facing the bending region 233 may be equal to the thickness w of the elastic member 410 from a first surface 410a attached on the surface 320a to a second surface 410b opposite to the first surface 410a and facing the bending region 233, or may be smaller than the thickness w. The elastic member 410 may be configured to support the bending region 233 positioned in the space of the recess 320 while the electronic device 101 performs a folding operation, by having the thickness w equal to the depth h of the recess 320 or greater than the depth h of the recess 320.

Referring to FIG. 5B, the elastic member 410 may include a first portion 411 positioned at least in the recess 320, and a second portion 412 connected to the first portion 411, positioned outside the recess 320, and attached to the support plate 310. For example, the first portion 411 may at least partially overlap the recess 320 when the support plate 310 is viewed from above (e.g., when viewed in a +z direction). For example, the first portion 411 may be a portion attached to the recess 320. The first portion 411 may be surrounded by the recess 320. For example, the second portion 412 may be a portion extending from the first portion 411 and disposed between the support plate 310 and the bending region 233. For example, the second portion 412 may cover a surface of the support plate 310 facing the bending region 233 by being disposed on the first portion 411. The second portion 412 may be a portion attached on the surface of the support plate 310. The elastic member 410 may increase an area in contact with the bending region 233 while the electronic device 101 performs a folding operation, by including the first portion 411 disposed in the recess 320 and the second portion 412 disposed outside the recess 320 and attached to the support plate 310. The elastic member 410 may reduce damage of the bending region 233 while the electronic device 101 performs a folding operation, by increasing an area supporting the bending region 233.

According to the embodiment described above, the elastic member 410 of the electronic device 101 may reduce damage of the bending region 233 positioned in the space of the recess 320 by having the thickness w equal to the depth h of the recess 320 or greater than the depth h of the recess 320. The elastic member 410 may reduce damage of the deformed bending region 233 by including the second portion 412 positioned outside the recess 320 and attached to the support plate 310.

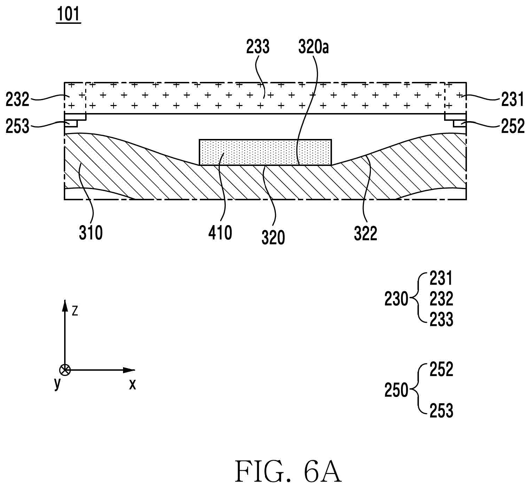

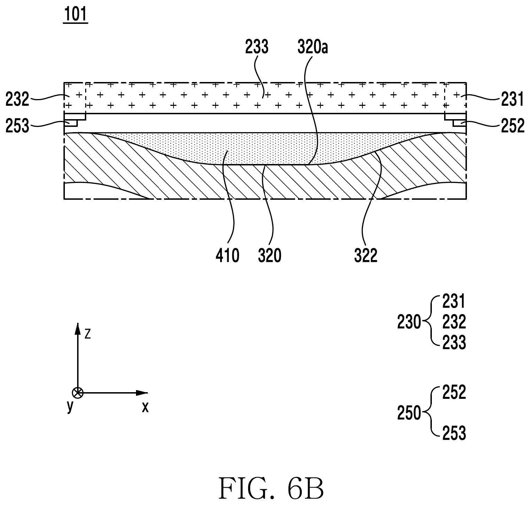

FIGS. 6A and 6B illustrate a portion of an exemplary electronic device in an unfolded state.

Referring to FIGS. 6A and 6B, an electronic device 101 may include a housing 200 including a first housing part (e.g., the first housing part 210 of FIG. 2A) and a second housing part (e.g., the second housing part 220 of FIG. 2A). The electronic device 101 may include a display 230 forming at least a portion of a front surface 200a of the housing 200, and including a first region 231, a second region 232 spaced apart from the first region 231, and a bending region 233 positioned between the first region 231 and the second region 232 and configured to be bent in a folded state of the foldable electronic device 101. The electronic device 101 may include a hinge structure (e.g., the hinge structure 250 of FIG. 2C) positioned under the flexible display 230 and rotatably connecting the second housing part 220 to the first housing part 210. The electronic device 101 may include a support plate 310 in the housing 200, coupled to the hinge structure 250, and including a recess 320 facing the bending region 233 and providing a space for the bending region 233 moving according to a change of the foldable electronic device 101 from an unfolded state to the folded state. The electronic device 101 may include an elastic member 410 disposed between the bending region 233 and the support plate 310, and attached to the recess 320 to be depressed by the bending region 233 positioned in the space in the folded state of the electronic device 101.

According to an embodiment, the recess 320 may include at least one curved portion 322 facing the bending region 233. For example, the at least one curved portion 322 may surround the elastic member 410. For example, the at least one curved portion 322 may be a portion having a curvature among an inner surface of the recess 320. The at least one curved portion 322 may extend from a surface 320a of the recess 320 facing the bending region 233. For example, the at least one curved portion 322 may include an inclined surface inclined with respect to the surface 320a of the recess 320 facing the bending region 233, but is not limited thereto. The recess 320 may include various shapes for a space for the bending region 233 and/or the elastic member 410.

Referring to FIG. 6B, the elastic member 410 may fill the space of the recess 320. For example, the elastic member 410 may have a shape corresponding to a shape of the recess 320. For example, the elastic member 410 may occupy the inside of the recess 320. For example, the elastic member 410 may cover an inner surface of the recess 320. The elastic member 410 may support the bending region 233 positioned in the space of the recess 320 and reduce damage of the deformed bending region 233 by filling the recess 320.

According to the embodiment described above, the recess 320 of the support plate 310 may accommodate the bending region 233 and/or the elastic member 410 by including various shapes for securing the space. The elastic member 410 may support the bending region 233 positioned in the space of the recess 320 and reduce damage of the deformed bending region 233 by filling the space of the recess 320.

FIGS. 7A and 7B illustrate a movable center bar structure in an exemplary electronic device.

Referring to FIGS. 7A and 7B, an electronic device 101 may include a housing 200 including a first housing part (e.g., the first housing part 210 of FIG. 2A) and a second housing part (e.g., the second housing part 220 of FIG. 2A). The electronic device 101 may include a display 230 forming at least a portion of a front surface 200a of the housing (e.g., the housing 200 of FIG. 2A), and including a first region 231, a second region 232 spaced apart from the first region 231, and a bending region 233 positioned between the first region 231 and the second region 232 and configured to be bent in a folded state of the foldable electronic device 101. The electronic device 101 may include a hinge structure (e.g., the hinge structure 250 of FIG. 2C) positioned under the flexible display 230 and rotatably connecting the second housing part 220 to the first housing part 210. The electronic device 101 may include a support plate 310 in the housing 200, coupled to the hinge structure 250, and including a recess 320 facing the bending region 233 and providing a space for the bending region 233 moving according to a change of the foldable electronic device 101 from an unfolded state to the folded state. The electronic device 101 may include an elastic member 410 disposed between the bending region 233 and the support plate 310, and attached to the recess 320 to be depressed by the bending region 233 positioned in the space in the folded state of the electronic device 101.

According to an embodiment, the support plate 310 may be configured to be movable in the housing 200 in a first direction 701 toward the bending region 233, and in a second direction 702 opposite to the first direction 701. For example, as the electronic device 101 performs a folding operation, at least a portion of the bending region 233 may move in the first direction 701 parallel to a z-axis, and in the second direction 702 opposite to the first direction 701. The support plate 310 may move in the first direction 701 and the second direction 702 in the housing 200 along the bending region 233. The elastic member 410 attached to the recess 320 of the support plate 310 may move in the first direction 701 and the second direction 702 along the support plate 310.

For example, at least a portion of the bending region 233 may move in the first direction 701 toward the outside of the electronic device 101 while the electronic device 101 is changed from the folded state to the unfolded state. The support plate 310 and/or the elastic member 410 attached to the recess 320 of the support plate 310 may move in the first direction 701 along the bending region 233. For example, at least a portion of the bending region 233 may move in the second direction 702 toward the inside of the housing 200 while the electronic device 101 is changed from the unfolded state to the folded state. The support plate 310 and/or the elastic member 410 attached to the recess 320 of the support plate 310 may move in the second direction 702 along the bending region 233.

According to an embodiment, a distance d1 that the bending region 233 moves toward the support plate 310 while the electronic device 101 is changed from the unfolded state to the folded state may be greater than a movement distance d2 of the support plate 310 in the second direction 702. For example, the distance d1 that a point p of the bending region 233 on the folding axis f of the display 230 moves while the electronic device 101 is changed from the unfolded state to the folded state may be greater than the movement distance d2 of the support plate 310. Since the distance d1 that the point p moves is greater than the movement distance d2 of the support plate 310, the point p may be supported by the elastic member 410 by being in contact with the elastic member 410. For example, the distance d1 that the point p of the bending region 233 on the folding axis f of the display 230 moves while the electronic device 101 is changed from the unfolded state to the folded state may be greater than the movement distance d2 of the support plate 310. Since the distance d1 that the point p moves is greater than the movement distance d2 of the support plate 310, the point p may be spaced apart from the elastic member 410. The electronic device 101 may support the bending region 233 by the elastic member 410 and reduce a thickness of the housing 200, by being configured such that the movement distance d1 of the bending region 233 is greater than the movement distance d2 of the support plate 310.

According to the embodiment described above, the electronic device 101 may reduce damage of the bending region 233 deformed while the electronic device 101 performs a folding operation and reduce a thickness of the housing 200, by being configured such that the bending region 233 is supported by the elastic member 410 attached to the recess 320 of the support plate 310 movable in the housing 200.

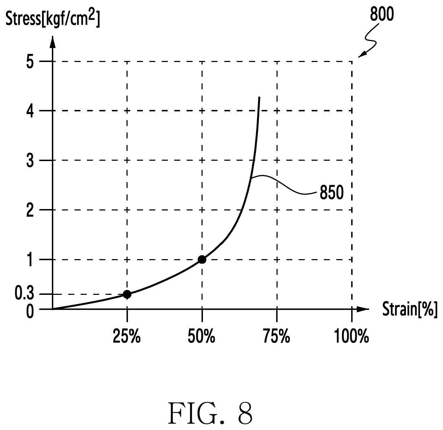

FIG. 8 illustrates a graph representing a characteristic of an elastic member of an exemplary electronic device.

Referring to FIG. 8, a horizontal axis of a graph 800 indicates a strain of an elastic member (e.g., the elastic member 410 of FIG. 4A) according to stress applied to the elastic member 410 while the elastic member 410 is depressed by a third display part (e.g., the bending region 233 of FIG. 3A). A vertical axis of the graph 800 indicates a repulsive force per unit area of the elastic member 410 with respect to the bending region 233 while the elastic member 410 is depressed by the bending region 233. The strain of the elastic member 410 may mean a thickness of the bending region 233 depressed by the bending region 233 with respect to the thickness of the elastic member 410 before being pressed by the bending region 233.

Referring to a graph 850, a slope of the graph 850 may mean a compression force deflection (C.F.D.) value of the elastic member 410. When referring to the graph 850, while an electronic device 101 is changed from an unfolded state to a bent state, a restoration rate of the elastic member 410 may be located within a range of greater than approximately 90% and less than approximately 99%. A repulsive force of the elastic member 410 may have a relatively small repulsive force of greater than 0 and less than 1kgf/cm² within the restoration rate within the range of greater than approximately 90% and less than approximately 99%. For example, the elastic member 410 may have a repulsive force of approximately 0.3kgf/cm² or less at 25% compression strain applied to the elastic member 410. It may have a repulsive force of approximately 1kgf/cm² or less at 50% compression strain applied to the elastic member 410. The elastic member 410 may reduce damage of the bending region 233 by having a relatively low repulsive force with respect to the bending region 233 while the electronic device 101 performs a folding operation. For example, the elastic member 410 may include a material having a relatively small compression set.

According to the embodiment described above, the elastic member 410 of the electronic device 101 may support the bending region 233 by a repulsive force by being depressed by the bending region 233 while the electronic device 101 performs a folding operation. The elastic member 410 may reduce damage of the bending region 233 by having a relatively low repulsive force with respect to the bending region 233.

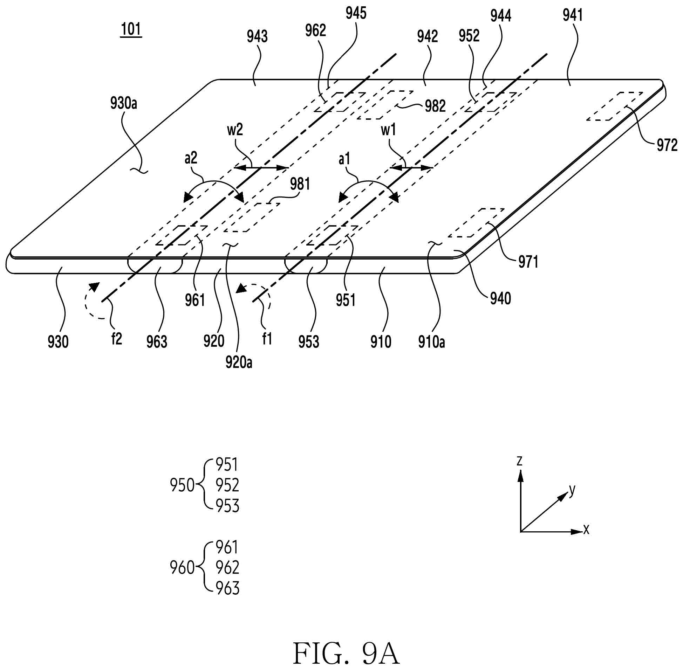

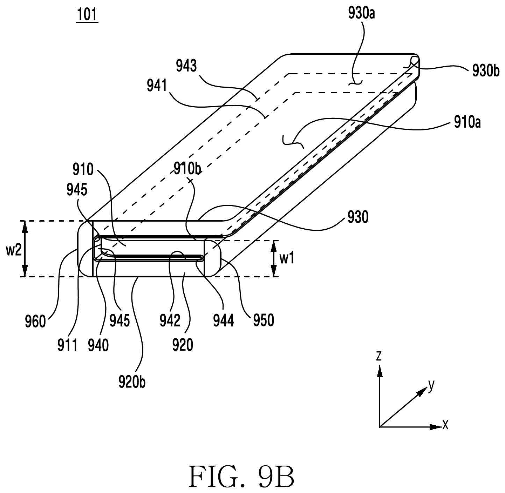

FIG. 9A illustrates an exemplary electronic device in an unfolded state. FIG. 9B illustrates an exemplary electronic device in a folded state.

A display (e.g., the display module 160 of FIG. 1) of an electronic device 101 may be folded at least once. The display may be referred to as a foldable display or a flexible display in terms of having a foldable structure. The electronic device 101 may be referred to as a foldable electronic device or a flexible electronic device in terms of including a foldable display. The electronic device 101 may be referred to as a multi foldable electronic device in terms of including a display folded multiple times. The electronic device 101 that may be referred to as the multi foldable electronic device may have a plurality of folding axes (e.g., a first folding axis f1 and a second folding axis f2).

Referring to FIGS. 9A and 9B, the electronic device 101 may include a first housing 910 (e.g., the first housing part 210 of FIG. 2A), a second housing 920 (e.g., the second housing part 220 of FIG. 2A), a third housing 930, a display 940 (e.g., the display 230 of FIG. 2A), a first hinge structure 950, and a second hinge structure 960. The first housing 910 may include a first surface 910a. The second housing 920 may include a second surface 920a. The third housing 930 may include a third surface 930a. The second housing 920 may be rotatably coupled to the first housing 910. The third housing 930 may be rotatably coupled to the second housing 920.

According to an embodiment, the display 940 may be disposed on a surface formed by the first housing 910, the second housing 920, and the third housing 930. The display 940 may be disposed on the first surface 910a, the second surface 920a, and the third surface 930a. For example, when referring to FIG. 9A, the first surface 910a, the second surface 920a, and the third surface 930a may be referred to as a front surface of the electronic device 101 in an unfolded state of the electronic device 101. For example, the first housing 910 may further include a fourth surface 910b opposite to the first surface 910a. The second housing 920 may further include a fifth surface 920b opposite to the second surface 920a. The third housing 930 may further include a sixth surface 930b opposite to the third surface 930a. The fourth surface 910b, the fifth surface 920b, and the sixth surface 930b may be referred to as a rear surface of the electronic device 101 in the unfolded state of the electronic device 101. However, it is not limited thereto, and the electronic device 101 may include, in the unfolded state of the electronic device 101, a plurality of surfaces forming a front surface and a plurality of other surfaces forming a rear surface opposite to the front surface, by including a plurality of folding axes.

According to an embodiment, the electronic device 101 may further include a cover display (not illustrated) disposed on a sixth surface 930b opposite to the third surface 930a of the third housing 930. For example, the cover display may be spaced apart from the display 940 by the third housing 930. For example, when referring to FIG. 9B, the cover display disposed on the sixth surface 930b may be configured to provide visual information to a user in a folded state. However, it is not limited thereto.

According to an embodiment, at least a portion of a camera module (e.g., the camera module 180 of FIG. 1) of the electronic device 101 may be visually exposed to the outside through the fifth surface 920b opposite to the second surface 920a of the second housing 920. For example, the camera module 180 may include at least one lens (not illustrated) for receiving light from the outside. At least a portion of the at least one lens may be exposed through the fifth surface 920b of the second housing 920. The electronic device 101 may provide various user experiences to the user in a plurality of folded states of the electronic device 101 by including the camera module 180 in which the at least a portion thereof is exposed to the outside through the fifth surface 920b of the second housing 920.

According to an embodiment, the display 940 may include a first display region 941, a second display region 942, and a third display region 943. The first display region 941 may be disposed on the first surface 910a of the first housing 910. The first display region 941 may be a region that is coupled to the first surface 910a and is not deformed. The second display region 942 may be disposed on the second surface 920a of the second housing 920. The second display region 942 may be a region that is coupled to the second surface 920a and is not deformed. The third display region 943 may be disposed on the third surface 930a of the third housing 930. The third display region 943 may be a region that is coupled to the third surface 930a and is not deformed. Since the first display region 941, the second display region 942, and the third display region 943 form a substantially flat surface, they may be referred to as planar regions.

According to an embodiment, the first hinge structure 950 may rotatably connect the first housing 910 and the second housing 920. The first hinge structure 950 may be disposed between the first housing 910 and the second housing 920. The second hinge structure 960 may rotatably connect the second housing 920 and the third housing 930. The second hinge structure 960 may be disposed between the second housing 920 and the third housing 930. For example, the first hinge structure 950 may be a structure connecting the first housing 910 and the second housing 920 such that the first housing 910 is rotatable with respect to the second housing 920. For example, the second hinge structure 960 may be a structure connecting the third housing 930 and the second housing 920 such that the third housing 930 is rotatable with respect to the second housing 920. For example, the first hinge structure 950 may provide the first folding axis f1 between the first housing 910 and the second housing 920 such that the first housing 910 is rotatable with respect to the second housing 920. For example, the second hinge structure 960 may provide the second folding axis f2 between the third housing 930 and the second housing 920 such that the third housing 930 is rotatable with respect to the second housing 920.

Although the electronic device 101 has been described as including the first hinge structure 950 and the second hinge structure 960, it is not limited thereto. The electronic device 101 may be folded twice or more by including a plurality of hinge structures including the first hinge structure 950 and the second hinge structure 960. The electronic device 101 may provide various user experiences to the user by including a plurality of folding axes provided by the plurality of hinge structures.

According to an embodiment, the electronic device 101 may include a plurality of support plates (e.g., the support plate 310 of FIG. 3A) for deformed regions (e.g., a fourth display region 944 and a fifth display region 945) by including the hinge structures 950 and 960 providing the plurality of folding axes. For example, a first support plate may be disposed under the fourth display region 944 along the first folding axis f1. A second support plate may be disposed under the fifth display region 945 along the second folding axis f2. The first support plate and the second support plate may each include a recess (e.g., the recess 320 of FIG. 3B) for the fourth display region 944 and the fifth display region 945, which are bent.

Referring to FIG. 9A, the first hinge structure 950 and the second hinge structure 960 may be configured to provide the unfolded (un-folding) state in which the first surface 910a, the second surface 920a, and the third surface 930a face substantially the same direction. The unfolded state of the electronic device 101 may be a state in which the first surface 910a, the second surface 920a, and the third surface 930a face substantially the same first direction (e.g., a +z direction).

For example, the electronic device 101 may be unfolded in the unfolded state. The unfolded state may be referred to as a state in which the first housing 910, the second housing 920, and the third housing 930 are unfolded. In the unfolded state, the first housing 910, the second housing 920, and the third housing 930 may form a substantially flat surface. For example, the first surface 910a, the second surface 920a, and the third surface 930a respectively included in the first housing 910, the second housing 920, and the third housing 930 may each be formed substantially flat. When the electronic device 101 including the first housing 910, the second housing 920, and the third housing 930 is in the unfolded state, the first surface 910a, the second surface 920a, and the third surface 930a may form a substantially flat plane. For example, the unfolded state may be a state in which the first display region 941, the second display region 942, and the third display region 943 of the display 940 face substantially the same first direction (e.g., the +z direction). For example, the unfolded state may be a state in which deformable regions (e.g., the fourth display region 944 and the fifth display region 945) of the display 940 are unfolded. For example, the unfolded state may be a state in which a first angle a1 between the first housing 910 and the second housing 920 and a second angle a2 between the second housing 920 and the third housing 930 are each substantially approximately 180 degrees.

Referring to FIG. 9B, the first hinge structure 950 and the second hinge structure 960 may be configured to provide a plurality of folded states (a plurality of folding states) in which at least one surface among the first surface 910a, the second surface 910b, and the third surface 930a faces a different direction. According to an embodiment, the plurality of folded states may mean states in which at least one surface among the first surface 910a and the third surface 930a is inclined with respect to the second surface 920a. For example, the plurality of folded states may mean states in which the second surface 920a faces the first direction (e.g., the +z direction) and at least one surface among the first surface 910a and the third surface 930a faces a direction different from the first direction. For example, the plurality of folded states may be states in which the first surface 910a, the second surface 920a, and the third surface 930a do not form a substantially flat surface. For example, the plurality of folded states may be states in which at least one display region among the first display region 941, the second display region 942, and the third display region 943 of the display 940 faces a different direction. For example, the plurality of folded states may be states in which at least a portion of deformable regions (e.g., the fourth display region 944 and the fifth display region 945) is bent. For example, the plurality of folded states may include states in which the first angle a1 between the first housing 910 and the second housing 920 is located within a range of 0 degrees or more and less than approximately 180 degrees. The plurality of folded states may include states in which the second angle a2 between the second housing 920 and the third housing 930 is located within a range of 0 degrees or more and less than approximately 180 degrees.

Referring to FIG. 9B, the folded state of the electronic device 101 may be a state, among the plurality of folded states of the electronic device 101, in which the second surface 920a faces the first direction (e.g., the +z direction), and the first surface 910a and the third surface 930a face a second direction (e.g., a -z direction) opposite to the first direction. For example, the folded state may be a state in which the second surface 920a faces the first surface 910a, and the third surface 930a faces the fourth surface 910b opposite to the first surface 910a. For example, the folded state may be a state in which the first housing 910 is positioned between the second housing 920 and the third housing 930. For example, the folded state may be a state in which the first housing 910 is disposed between the second display region 942 and the third display region 943. For example, the folded state may be a state in which the second display region 942 faces the first direction (e.g., the +z direction), and the first display region 941 and the third display region 943 face the second direction (e.g., the -z direction) opposite to the first direction. For example, the folded state may be a state in which the fourth display region 944 is bent maximally. For example, in the folded state, the first housing 910, the second housing 920, and the third housing 930 may be stacked in the first direction (e.g., the +z direction).

According to an embodiment, the first hinge structure 950 may include a plurality of first hinges 951 and 952. The second hinge structure 960 may include a plurality of second hinges 961 and 962. The first hinges 951 and 952 may be disposed between the first housing 910 and the second housing 920. The first hinges 951 and 952 may rotatably connect the first housing 910 to the second housing 920. For example, through the first hinges 951 and 952, the first housing 910 may rotate with respect to the second housing 920 based on the first folding axis f1. According to an embodiment, through rotation of the first housing 910, the first angle a1 between the second housing 920 and the first housing 910 may be located within a range of a certain angle (e.g., approximately 0 degrees to approximately 180 degrees). The certain angle is not limited to 0 degrees to approximately 180 degrees, and the first housing 910 may rotate with respect to the second housing 920 within a range supported by the first hinges 951 and 952. The second hinges 961 and 962 may be disposed between the second housing 920 and the third housing 930. The second hinges 961 and 962 may rotatably connect the third housing 930 to the second housing 920. For example, through the second hinges 961 and 962, the third housing 930 may rotate with respect to the second housing 920 based on the second folding axis f2. According to an embodiment, through rotation of the third housing 930, the second angle a2 between the second housing 920 and the third housing 930 may be located within a range of a certain angle (e.g., approximately 0 degrees to approximately 180 degrees). The certain angle is not limited to 0 degrees to approximately 180 degrees, and the third housing 930 may rotate with respect to the second housing 920 within a range supported by the second hinges 961 and 962.

According to an embodiment, the first hinge structure 950 may include a first hinge cover 953. The second hinge structure 960 may include a second hinge cover 963. The first hinges 951 and 952 may be covered by the first hinge cover 953. One 951 of the first hinges 951 and 952 may be disposed in a partial region of the first hinge cover 953, and another one 952 may be disposed in another partial region of the first hinge cover 953. The second hinges 961 and 962 may be covered by the second hinge cover 963. One 961 of the second hinges 961 and 962 may be disposed in a partial region of the second hinge cover 963, and another one 962 may be disposed in another partial region of the second hinge cover 963.

According to an embodiment, the display 940 may further include the fourth display region 944 and the fifth display region 945, which are flexible regions in which at least a portion thereof may be bent flexibly (can be bent flexibly), so as to be rotatable by the first hinge structure 950 and/or the second hinge structure 960. The fourth display region 944 may be disposed on the first hinge cover 953. The fourth display region 944 may be coupled to the first hinge cover 953 or the first hinges 951 and 952. For example, the fourth display region 944 may be supported by a hinge plate (not illustrated) included in the first hinges 951 and 952. The fourth display region 944 may be deformed as the first housing 910 rotates with respect to the second housing 920 around the first folding axis f1. The fifth display region 945 may be disposed on the second hinge cover 963. The fifth display region 945 may be coupled to the second hinge cover 963 or the second hinges 961 and 962. For example, the fifth display region 945 may be supported by a hinge plate (not illustrated) included in the second hinges 961 and 962. The fifth display region 945 may be deformed as the third housing 930 rotates with respect to the second housing 920 around the second folding axis f2.

According to an embodiment, a first width w1 of the first hinge structure 950 may be smaller than a second width w2 of the second hinge structure 960. For example, the second width w2 may be greater than the first width w1. As the second width w2 is greater than the first width w1, a space corresponding to a difference between the second width w2 and the first width w1 may be formed in the folded state in which the first housing 910 and the third housing 930 are folded with respect to the second housing 920. A structure may be formed in which the first housing 910 is disposed so that at least a portion of the first housing 910 is accommodated in the space. For example, an area of the fifth display region 945 disposed on the second hinge structure 960 may be greater than an area of the fourth display region 944 disposed on the first hinge structure 950. For example, a width w2 of the fifth display region 945 may be greater than a width w1 of the fourth display region 944. For example, when the electronic device 101 is changed from the unfolded state to the plurality of folded states, a radius of curvature of the fifth display region 945 may be greater than a radius of curvature of the fourth display region 944. For example, since the first width w1 of the first hinge structure 950 is smaller than the second width w2 of the second hinge structure 960, the third housing 930 may be stacked on the first housing 910 after the first housing 910 is stacked on the second housing 920 while the electronic device 101 is changed from the unfolded state to the folded state. The electronic device 101 may be referred to as an electronic device 101 having a G-fold shape in the folded state. For example, the folded state of the electronic device 101 may be a state in which, after the first housing 910 is folded with respect to the second housing 920, the third housing 930 is folded with respect to the second housing 920 so that the third housing 930 covers the fourth surface 910b opposite to the first surface 910a of the first housing 910. The electronic device 101 may have a G shape when the electronic device 101 is viewed from a side (e.g., when viewed in a +y direction). However, it is not limited thereto.

According to an embodiment, a rotation radius of the first housing 910 with respect to the second housing 920 may be smaller than a rotation radius of the third housing 930 with respect to the second housing 920.

According to an embodiment, the electronic device 101 may further include first magnets 971 and 972, and second magnets 981 and 982 configured to interact with the first magnets 971 and 972. The first magnets 971 and 972 may be disposed in the first housing 910. The second magnets 981 and 982 may be disposed in the second housing 920. For example, the first magnets 971 and 972 may be disposed closer to another side surface facing a side surface than the side surface of the first housing 910 toward the first hinge structure 950. The first magnets 971 and 972 may at least partially overlap an inactive region disposed along a periphery of the first display region 941 when the display 940 is viewed from above. The first magnets 971 and 972 may be disposed to face the second magnets 981 and 982 when the first housing 910 rotates and is folded with respect to the second housing 920 along the first folding axis f1. For example, the second magnets 981 and 982 may be disposed along the second hinge structure 960. According to an embodiment, at least a portion of the first display region 941 may be fastened on at least a portion of the second display region 942 through the magnetic force. By the magnetic force, rotation of the first housing 910 with respect to the second housing 920 in the folded state may be limited.

Referring to FIG. 9A, while changing from the unfolded state to the folded state, the first housing 910 may rotate with respect to the second housing 920 based on the first folding axis f1 through the first hinge structure 950. According to an embodiment, in the folded state, the first housing 910 may face the second housing 920. For example, in the folded state, the second display region 942 disposed in the second housing 920 may face the first display region 941 disposed in the first housing 910. According to an embodiment, in the folded state, the first housing 910 may be disposed to be stacked over the second housing 920 based on a Y+ axis.

Referring to FIG. 9B, through the second hinge structure 960, the third housing 930 may rotate with respect to the second housing 920 based on the second folding axis f2. In the folded state, the third housing 930 may face the first housing 910. For example, in the folded state, the third display region 943 disposed in the third housing 930 may face the fourth surface 910b opposite to the first surface 910a of the first housing 910. According to an embodiment, in the folded state of the electronic device 101, when the electronic device 101 is viewed from a side (e.g., when viewed within a +y direction), the first housing 910 may be disposed to be stacked over the second housing 920, and the third housing 930 may be disposed to be stacked over the first housing 910, based on a +z axis. For example, in the folded state, the first housing 910 may be disposed on the second housing 920. In the folded state, the third housing 930 may be disposed on the first housing 910.

According to an embodiment, an overlapping area of the display 940 and the second hinge structure 960 when the second hinge cover 963 is viewed from above in the folded state may be greater than an overlapping area of the display 940 and the first hinge structure 950 when the first hinge cover 953 is viewed from above. The second width w2 of the second hinge cover 963 corresponding to the fifth display region 945 may be greater than the first width w1 of the first hinge cover 953 corresponding to the fourth display region 944 (e.g., the fourth display region 944 of FIG. 9A). A difference between the first width w1 and the second width w2 may correspond to a thickness of the third housing 930. According to an embodiment, when a portion (e.g., a first side surface 911) of the first housing 910 is disposed to face the fifth display region 945 in the folded state, the second width w2 may be formed to have a size that may be accommodated in a portion of a space formed when the third housing 930 is stacked on the first housing 910.

According to an embodiment, based on the difference between the first width w1 and the second width w2, a housing that is foldable first among the third housing 930 and the first housing 910 may be determined. For example, the first housing 910 may rotate first with respect to the second housing 920 based on the first folding axis f1. The third housing 930 may rotate with respect to the second housing 920 based on the second folding axis f2 after the first housing 910 is folded. As the width w1 of the first hinge structure 950 is narrower than the width w2 of the second hinge structure 960, the first housing 910 may be folded to face the second housing 920 first. As the width w2 of the second hinge structure 960 is wider than the width w1 of the first hinge structure 950, the third housing 930 may be folded to face the fourth surface 910b of the first housing 910 after the first housing 910 is folded.

According to the embodiment described above, the electronic device 101 may provide the display 940 foldable at least once or more by including the plurality of hinge structures 950 and 960. The display 940 may be folded multiple times through widths of the different hinge structures 950 and 960.

According to an embodiment described above, a foldable electronic device (e.g., the electronic device 101 of FIG. 1) may comprise a housing (e.g., the housing 200 of FIG. 2A) including a first housing part (e.g., the first housing part 210 of FIG. 2A), and a second housing part (e.g., the second housing part 220 of FIG. 2A). The foldable electronic device may comprise a flexible display (e.g., the display 230 of FIG. 2A) forming at least a portion of a front surface (e.g., the front surface 200a of FIG. 3A) of the housing, and including a first region (e.g., the first region 231 of FIG. 3A), a second region (e.g., the second region 232 of FIG. 2A) spaced apart from the first region, and a bending region (e.g., the bending region 233 of FIG. 3A) positioned between the first region and the second region and configured to be bent in a folded state of the foldable electronic device. The foldable electronic device may comprise a hinge assembly (e.g., the hinge assembly 250 of FIG. 2C) positioned under the flexible display and rotatably connecting the second housing part to the first housing part. The foldable electronic device may comprise a support plate (e.g., the support plate 310 of FIG. 3A) in the housing, coupled to the hinge assembly, and including a recess (e.g., the recess 320 of FIG. 3A) facing the bending region and providing a space for the bending region moved according to a change from an unfolded state to the folded state of the foldable electronic device. The foldable electronic device may comprise an elastic member (e.g., the elastic member 410 of FIG. 4A) disposed between the bending region and the support plate, and attached to the recess to be depressed by the bending region positioned in the space in the folded state of the foldable electronic device.

For example, the foldable electronic device may further comprise a coating layer (e.g., the coating layer 420 of FIG. 4A) attached to a rear surface (e.g., the rear surface 230e of FIG. 4A) of the flexible display facing the hinge assembly, and at least partially disposed between the bending region and the elastic member.

For example, the elastic member may be configured to have a contact area with the bending region which varies along the bending region moving toward the support plate while the foldable electronic device is changed from the unfolded state to the folded state.

For example, a thickness (e.g., w of FIG. 5A) of the elastic member from the recess toward the bending region may be equal to or greater than a depth (e.g., h of FIG. 5A) of the recess for the space.

For example, the hinge assembly may include a first hinge plate (e.g., the first hinge plate 252 of FIG. 2C) supporting the first region, and a second hinge plate (e.g., the second hinge plate 253 of FIG. 2C) supporting the second region. The support plate may be positioned at least partially between the first hinge plate and the second hinge plate in the unfolded state of the foldable electronic device.

For example, the bending region may be spaced apart from the support plate by the elastic member interposed between the recess and the bending region in the folded state of the foldable electronic device.

For example, the elastic member may be deformed by being in contact with the bending region while changing from the unfolded state to the folded state, and may be restored to a restoration rate located within a range of 90% to 99% by being separated from the bending region while changing from the folded state to the unfolded state.

For example, the support plate may be configured to be movable in the housing in a first direction (e.g., the first direction 701 of FIG. 7A) toward the bending region and in a second direction (e.g., the second direction 702 of FIG. 7A) opposite to the first direction.

For example, a distance (e.g., d1 of FIG. 7B) that the bending region moves toward the support plate while changing from the unfolded state to the folded state may be greater than a movement distance (e.g., d2 of FIG. 7B) of the support plate in the second direction.

For example, the elastic member may include a first surface (e.g., the first surface 410a of FIG. 4A) attached on a surface (e.g., the surface 320a of FIG. 4A) of the recess facing the bending region, and a second surface (e.g., the second surface 410b of FIG. 4A) opposite to the first surface and in contact with the bending region in the folded state of the foldable electronic device. The second surface may be dented toward the first surface by the bending region while the foldable electronic device is changed from the unfolded state to the folded state, and may move toward the bending region while the foldable electronic device is changed from the folded state to the unfolded state.

For example, the second surface may have a shape corresponding to a shape of at least a portion of the bending region which is bent in the folded state of the foldable electronic device.

For example, the elastic member may include a first portion (e.g., the first portion 411 of FIG. 5B) positioned in the recess, and a second portion (e.g., the second portion 412 of FIG. 5B) connected to the first portion, positioned outside the recess, and attached to the support plate.

For example, the recess may include at least one curved portion (e.g., the at least one curved portion 322 of FIG. 6A) facing the bending region.

For example, the elastic member may fill the space of the recess.

For example, the elastic member may include polyurethane (PU) foam.

According to an embodiment, a foldable electronic device may comprise a flexible display including a first region, a second region spaced apart from the first region, and a bending region that is positioned between the first region and the second region and is configured to be bent in a folded state of the foldable electronic device. The foldable electronic device may comprise a support plate including a recess facing the bending region and providing a space for the bending region moved according to a change from an unfolded state to the folded state of the foldable electronic device. The foldable electronic device may comprise an elastic member disposed between the bending region and the support plate, attached to the recess to be depressed by the bending region positioned within the space in the folded state of the foldable electronic device. The foldable electronic device may comprise a coating layer attached to the flexible display, and at least partially disposed between the bending region and the elastic member. The coating layer may be spaced apart from the elastic member in the unfolded state of the foldable electronic device, and may be in contact with the elastic member in the folded state of the foldable electronic device.

For example, the elastic member may be configured to have a contact area with the coating layer which varies along the bending region moving toward the support plate while the foldable electronic device is changed from the unfolded state to the folded state.

For example, a thickness of the elastic member from the recess toward the bending region may be equal to or greater than a depth of the recess for the space.

For example, the elastic member may be deformed by the bending region while the foldable electronic device is changed from the unfolded state to the folded state, and may be restored to a restoration rate located within a range of 90% to 99% by being separated from the coating layer while the foldable electronic device is changed from the folded state to the unfolded state.

For example, the foldable electronic device may further comprise a housing including a first housing part supporting the first region and a second housing part supporting the second region and rotatably coupling with the first housing part. The support plate may be configured to be movable in the housing in a first direction toward the bending region and in a second direction opposite to the first direction. A distance that the bending region moves toward the support plate while the foldable electronic device is changed from the unfolded state to the folded state may be greater than a movement distance of the support plate in the second direction.

The technical problems to be achieved in the present disclosure are not limited to those described above, and other technical problems not mentioned herein will be clearly understood by those having ordinary knowledge in the art to which the present disclosure belongs.

According to an embodiment, a foldable electronic device (e.g., the electronic device 101 of FIG. 1) may comprise a housing (e.g., the housing 200 of FIG. 2A) including a first housing part (e.g., the first housing part 210 of FIG. 2A) and a second housing part (e.g., the second housing part 220 of FIG. 2A). The foldable electronic device may comprise a flexible display, disposed on the first housing part and the second housing part, including a bending region (e.g., the bending region 233 of FIG. 3A) to be bent in a folded state of the foldable electronic device. The foldable electronic device may comprise a hinge assembly (e.g., the hinge structure 250 of FIG. 2C) positioned under the flexible display and rotatably connecting the second housing part to the first housing part. The foldable electronic device may comprise a support plate (e.g., the support plate 310 of FIG. 3A) coupled to the hinge assembly and including a recess (e.g., the recess 320 of FIG. 3B) facing the bending region. A portion of the bending region may be disposed in a space provided by the recess in the folded state. The foldable electronic device may comprise an elastic member (e.g., the elastic member 410 of FIG. 4A) disposed between the bending region and the support plate.

For example, the hinge assembly may include a first hinge plate (e.g., the first hinge plate 252 of FIG. 2C) disposed in the first housing part, and a second hinge plate (e.g., the second hinge plate 253 of FIG. 2C) disposed in the second housing part. The support plate may include a center bar disposed between the first hinge plate and the second hinge plate in the unfolded state of the foldable electronic device. The center bar may be configured to be stationary such that there is no vertical movement of the center bar while changing between the unfolded state and the folded state of the foldable electronic device.

For example, the elastic member may be attached to the recess of the support plate and configured to be depressed by the portion of the bending region disposed in the space in the folded state.

For example, the foldable electronic device may further comprise a coating layer (e.g., the coating layer 420 of FIG. 4A) attached to a rear surface of the flexible display facing the hinge assembly, and at least partially disposed between the bending region and the elastic member.

For example, the elastic member may be configured to have a contact area with the bending region which varies along the bending region moving toward the support plate while the foldable electronic device is changed from the unfolded state to the folded state.

For example, a thickness (e.g., w of FIG. 5A) of the elastic member from the recess toward the bending region may be greater than or equal to a depth (e.g., h of FIG. 5A) of the recess for the space.

For example, the elastic member may be deformed by being in contact with the bending region while the foldable electronic device is changed from the unfolded state to the folded state, and may be restored to a restoration rate located within a range of 90% to 99% by being separated from the bending region while the foldable electronic device is changed from the folded state to the unfolded state.

For example, the support plate may be configured to be movable in the housing in a first direction (e.g., the first direction 701 of FIG. 7A) toward the bending region and in a second direction (e.g., the second direction 702 of FIG. 7A) opposite to the first direction.

For example, a distance (e.g., d1 of FIG. 7B) that the bending region moves toward the support plate while the foldable electronic device is changed from the unfolded state to the folded state may be greater than a movement distance (e.g., d2 of FIG. 7B) of the support plate in the second direction.

For example, the elastic member may include a first surface (e.g., the first surface 410a of FIG. 4A) attached on a surface of the recess facing the bending region, and a second surface (e.g., the second surface 410b of FIG. 4A) opposite to the first surface and in contact with the bending region in the folded state of the foldable electronic device. The second surface may be dented toward the first surface by the bending region while the foldable electronic device is changed from the unfolded state to the folded state, and may be moved toward the bending region while the foldable electronic device is changed from the folded state to the unfolded state.

For example, the second surface may have a shape corresponding to a shape of at least a portion of the bent bending region in the folded state of the foldable electronic device.

For example, the elastic member may include a first portion (e.g., the first portion 411 of FIG. 5B) positioned in the recess 320, and a second portion (e.g., the second portion 412 of FIG. 5B) connected to the first portion, positioned outside the recess, and attached to the support plate.

For example, the recess may include at least one curved portion (e.g., the at least one curved portion 322 of FIG. 6A) facing the bending region.

For example, the elastic member may fill the space of the recess.

For example, the elastic member may include polyurethane (PU) foam.

The effects that may be obtained from the present disclosure are not limited to those described above, and any other effects not mentioned herein will be clearly understood by those having ordinary knowledge in the art to which the present disclosure belongs.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A foldable electronic device (101) comprising:
a housing (200) including a first housing part (210) and a second housing part (220);
a flexible display (230), disposed on the first housing part (210) and the second housing part (220), including a bending region (233) to be bent in a folded state of the foldable electronic device (101);
a hinge assembly (250) positioned under the flexible display (230) and rotatably connecting the second housing part (220) to the first housing part (210);
a support plate (310) coupled to the hinge assembly (250) and including a recess (320) facing the bending region (233), wherein a portion of the bending region (233) is disposed in a space provided by the recess (320) in the folded state; and
an elastic member (410) disposed between the bending region (233) and the support plate (310).

2. The foldable electronic device (101) of claim 1,
wherein the hinge assembly (250) includes:
a first hinge plate (252) disposed in the first housing part (210); and
a second hinge plate (253) disposed in the second housing part (220); and,
wherein the support plate (310) includes a center bar disposed between the first hinge plate (252) and the second hinge plate (253) in an unfolded state of the foldable electronic device (101), and
wherein the center bar is configured to be stationary such that there is no vertical movement of the center bar while changing between the unfolded state and the folded state of the foldable electronic device (101).

3. The foldable electronic device (101) of claim 1 or claim 2,
wherein the elastic member (410) is attached to the recess (320) of the support plate (310) and configured to be depressed by the portion of the bending region (233) disposed in the space in the folded state.

4. The foldable electronic device (101) of any one of claims 1 to 3, further comprising:
a coating layer (420) attached to a rear surface (230e) of the flexible display (230) facing the hinge assembly (250), and at least partially disposed between the bending region (233) and the elastic member (410).

5. The foldable electronic device (101) of any one of claims 1 to 4,
wherein the elastic member (410) is configured to have a contact area with the bending region (233) which varies along the bending region (233) moving toward the support plate (310) while the foldable electronic device (101) is changed from an unfolded state to the folded state.

6. The foldable electronic device (101) of any one of claims 1 to 5,
wherein a thickness (w) of the elastic member (410) from the recess (320) toward the bending region (233) is greater than or equal to a depth (h) of the recess (320) for the space.

7. The foldable electronic device (101) of any one of claims 1 to 6,
wherein the elastic member (410) is deformed by being in contact with the bending region (233) while the foldable electronic device (101) is changed from an unfolded state to the folded state, and is restored to a restoration rate located within a range of 90% to 99% by being separated from the bending region (233) while the foldable electronic device (101) is changed from the folded state to the unfolded state.

8. The foldable electronic device (101) of any one of claims 1 to 7,
wherein the support plate (310) is configured to be movable in the housing (200) in a first direction (701) toward the bending region (233) and in a second direction (702) opposite to the first direction (701).

9. The foldable electronic device (101) of claim 8,
wherein a distance (d1) that the bending region (233) moves toward the support plate (310) while the foldable electronic device (101) is changed from an unfolded state to the folded state is greater than a movement distance (d2) of the support plate (310) in the second direction (702).

10. The foldable electronic device (101) of any one of claims 1 to 9,
wherein the elastic member (410) includes:
a first surface (410a) attached on a surface (320a) of the recess (320) facing the bending region (233); and
a second surface (410b) opposite to the fist surface and in contact with the bending region (233) in the folded state of the foldable electronic device (101), and
wherein the second surface (410b) is dented toward the first surface (410a) by the bending region (233) while the foldable electronic device (101) is changed from an unfolded state to the folded state, and moves toward the bending region (233) while the foldable electronic device (101) is changed from the folded state to the unfolded state.

11. The foldable electronic device (101) of claim 10,
wherein the second surface (410b) has a shape corresponding to a shape of at least a portion of the bending region (233) which is bent in the folded state of the foldable electronic device (101).

12. The foldable electronic device (101) of any one of claims 1 to 11,
wherein the elastic member (410) includes:
a first portion (411) positioned in the recess (320); and
a second portion (412) connected to the first portion (411), positioned outside the recess (320), and attached to the support plate (310).

13. The foldable electronic device (101) of any one of claims 1 to 12,
wherein the recess (320) includes at least one curved portion (322) facing the bending region (233).

14. The foldable electronic device (101) of any one of claims 1 to 13,
wherein the elastic member (410) fills the space of the recess (320).

15. The foldable electronic device (101) of any one of claims 1 to 14,
wherein the elastic member (410) includes polyurethane (PU) foam.
